# EUROPEAN PATENT SPECIFICATION

(11) **EP 2 966 824 B1**
(45) Date of publication and mention of the grant of the patent: **10.05.2017**
(21) Application number: 13879749.3
(22) Date of filing: 25.03.2013
(51) Int. Cl.: H04L 27/26, H04W 4/06

(54) **METHOD AND DEVICE FOR PROCESSING SERVICE OF NEW CARRIER TYPE CELL AND COMMUNICATION SYSTEM**
VERFAHREN UND VORRICHTUNG ZUR VERARBEITUNG VON DIENSTEN EINER NEUEN TRÄGERZELLE UND KOMMUNIKATIONSSYSTEM
PROCÉDÉ ET DISPOSITIF DE TRAITEMENT D'UN SERVICE DE CELLULE À NOUVEAU TYPE DE PORTEUSE ET SYSTÈME DE COMMUNICATION

(43) Date of publication of application: 13.01.2016
(73) Proprietor: Huawei Technologies Co., Ltd., Longgang District Shenzhen, Guangdong 518129 (CN)
(72) Inventor: HU, Zhenxing, Shenzhen Guangdong 518129 (CN); ZHAO, Junhui, Shenzhen Guangdong 518129 (CN); QUAN, Wei, Shenzhen Guangdong 518129 (CN); JI, Pengyu, Shenzhen Guangdong 518129 (CN); ZHANG, Jian, Shenzhen Guangdong 518129 (CN); ZENG, Qinghai, Shenzhen Guangdong 518129 (CN); DAI, Mingzeng, Shenzhen Guangdong 518129 (CN)
(74) Representative: Gill Jennings & Every LLP
(86) International application number: PCT/CN2013/073136
(87) International publication number: WO 2014/153705

(56) References cited:
- WO-A1-2010/020134
- WO-A1-2013/024334
- WO-A2-2013/032272
- US-A1- 2011 141 963
- QUALCOMM INCORPORATED: "Forward compatibility of NCT", 3GPP DRAFT; R1-130582 FORWARD COMPATIBILITY OF NCT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St. Julian; 20130128 - 20130201 19 January 2013 (2013-01-19), XP050663838, Retrieved from the Internet: URL:http://www.3gpp.org/ftp/tsg_ran/WG1_RL 1/TSGR1_72/Docs/ [retrieved on 2013-01-19]
- ALCATEL-LUCENT: "Discussion on MBMS and NCT", 3GPP DRAFT; R2-131349_NCT AND MBSFN-V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chicago, USA; 20130415 - 20130419 6 April 2013 (2013-04-06), XP050699496, Retrieved from the Internet: URL:http://www.3gpp.org/ftp/tsg_ran/WG2_RL 2/TSGR2_81bis/Docs/ [retrieved on 2013-04-06]
- RESEARCH IN MOTION UK LIMITED: "MCH support on NCT", 3GPP DRAFT; R2-131180, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chicago; 20130415 - 20130419 6 April 2013 (2013-04-06), XP050699446, Retrieved from the Internet: URL:http://www.3gpp.org/ftp/tsg_ran/WG2_RL 2/TSGR2_81bis/Docs/ [retrieved on 2013-04-06]

## Description

### TECHNICAL FIELD

Embodiments of the present invention relate to communications technologies, and in particular, to a service processing method for a new carrier type cell, an apparatus, and a communications system.

### BACKGROUND

A multimedia broadcast multicast service (referred to as MBMS in short) is introduced in a fourth-generation mobile communications system such as long term evolution (referred to as LTE in short) system Release 10 (referred to as LTE R10 in short), and is enhanced separately in R10 and R11. The MBMS supports two modes: a multimedia broadcast service and a multicast service, and the MBMS not only can directly broadcast multimedia video information to all users, but also can send the multimedia video information to a group of paying subscribers for the subscribers to watch. The MBMS can help an operator deploy multiple commercial applications such as multimedia advertising, free and pay television channels, and group multimedia messaging, and the operator can deploy a mobile-phone television service at a relatively low network deployment cost.

In the prior art, a smallest coverage unit of the MBMS is a legacy carrier type (referred to as LCT in short) cellular cell, and can provide rich services for users at different locations. Because a coverage area of each cell in a cellular network is relatively small and has a more precise network planning, different content may be broadcast in different areas of the network. However, a new carrier type (referred to as NCT in short) cell is introduced in existing LTE R12, and the NCT cell cannot support an MBMS service. Attention is drawn to the document WO 2013/024334 A.

### SUMMARY

Embodiments of the present invention provide a data processing method for a new carrier type cell, an apparatus, and a communications system, so as to implement support of an NCT cell for an MBMS service.

According to a first aspect of the present invention, a service processing method for a new carrier type cell is provided, including:
receiving, by user equipment UE, a system message sent by a base station corresponding to a legacy carrier type LCT cell, where the system message includes multimedia broadcast multicast Service MBMS configuration information of a new carrier type NCT cell; and
performing, by the UE, service configuration processing on an MBMS of the NCT cell according to the MBMS configuration information of the NCT cell.

In a first possible implementation manner of the first aspect, the MBMS configuration information of the NCT cell includes the following information:
NCT cell identifier information or NCT carrier identifier information;
multimedia broadcast multicast service single frequency network MBSFN area identifier information; and
multicast control channel MCCH configuration information.

According to the first possible implementation manner of the first aspect, in a second possible implementation manner of the first aspect, the MBMS configuration information of the NCT cell further includes at least one of the following information:
an MCCH information change notification indication;
an MCCH information change notification configuration;
non-MBMS resource allocation information; and
working mode information.

According to the second possible implementation manner of the first aspect, in a third possible implementation manner of the first aspect, the working mode information includes at least one of the following information:
spatial multiplexing configuration information;
reference signal configuration information; and
transmission mode configuration information.

With reference to the first aspect or any one of the first to third possible implementation manners of the first aspect, in a fourth possible implementation manner of the first aspect, after the receiving, by user equipment UE, a system message sent by a base station corresponding to a legacy carrier type LCT cell, the method further includes:
receiving, by the UE, a physical downlink control channel PDCCH, of the LCT cell, sent by the base station corresponding to the LCT cell, where the PDCCH is used for indicating an MCCH information change notification of the NCT cell.

According to the fourth possible implementation manner of the first aspect, in a fifth possible implementation manner of the first aspect, that the PDCCH is used for indicating an MCCH information change notification of the NCT cell includes one of the following:
using a reserved bit of downlink control information DCI 1C to indicate the MCCH information change notification of the NCT cell;
using bits of DCI 0, 1, 1A, 1B, 1D, 2, 2A, 2B, 2C, 3, 3A, and 4 to indicate the MCCH information change notification of the NCT cell; and
using DCI scrambled with a first MBMS-radio network temporary identifier M-RNTI to indicate the MCCH information change notification of the NCT cell, where the first M-RNTI corresponds to the MCCH information change notification.

According to the fourth possible implementation manner of the first aspect, in a sixth possible implementation manner of the first aspect, the MCCH information change notification uses a bit in DCI to indicate an NCT carrier or an MBSFN area where MCCH information is changed; and
the MBMS configuration information of the NCT cell further includes an extended MCCH information change notification configuration, where the extended MCCH change notification configuration information is used for indicating an MBSFN area, where the MCCH information is changed, in the NCT carrier.

With reference to the first aspect or any one of the first to third possible implementation manners of the first aspect, in a seventh possible implementation manner of the first aspect, after the receiving, by user equipment UE, a system message sent by a base station corresponding to a legacy carrier type LCT cell, the method further includes:
receiving, by the UE, a PDCCH, of the NCT cell, sent by a base station corresponding to the NCT cell, where the PDCCH is used for indicating an MCCH information change notification of the NCT cell.

According to the seventh possible implementation manner of the first aspect, in an eighth possible implementation manner of the first aspect, the PDCCH includes an MCCH information change notification scrambled by using an M-RNTI.

With reference to the first aspect or any one of the first to eighth possible implementation manners of the first aspect, in a ninth possible implementation manner of the first aspect, after the receiving, by user equipment UE, a system message sent by a base station corresponding to a legacy carrier type LCT cell, the method further includes:
receiving, by the UE, MBSFN area configuration information, of the NCT cell, sent by the base station corresponding to the NCT cell; or
receiving, by the UE, MBSFN area configuration information, of the NCT cell, sent by the base station corresponding to the LCT cell.

According to the ninth possible implementation manner of the first aspect, in a tenth possible implementation manner of the first aspect, after the receiving, by the UE, MBSFN area configuration information, the method further includes:
receiving, by the UE, multicast channel scheduling information MSI and a multicast service channel MTCH, of the NCT cell, sent by the base station corresponding to the NCT cell.

According to a second aspect of the present invention, a service processing method for a new carrier type cell is provided, including:
generating, by a base station corresponding to a legacy carrier type LCT cell, a system message, where the system message includes multimedia broadcast multicast Service MBMS configuration information of a new carrier type NCT cell; and
sending, by the base station corresponding to the LCT cell, the system message to user equipment UE, so that the UE performs service configuration processing on an MBMS of the NCT cell according to the MBMS configuration information of the NCT cell.

In a first possible implementation manner of the second aspect, before the generating, by a base station corresponding to a legacy carrier type LCT cell, a system message, the method further includes:
receiving, by the base station corresponding to the LCT cell, the MBMS configuration information, of the NCT cell, sent by a base station corresponding to the NCT cell or a multi-cell/multicast coordination entity MCE.

With reference to the second aspect or the first possible implementation manner of the second aspect, in a second possible implementation manner of the second aspect, the MBMS configuration information of the NCT cell includes the following information:
NCT cell identifier information or NCT carrier identifier information;
multimedia broadcast multicast service single frequency network MBSFN area identifier information; and
multicast control channel MCCH configuration information.

According to the second possible implementation manner of the second aspect, in a third possible implementation manner of the second aspect, the MBMS configuration information of the NCT cell further includes at least one of the following information:
an MCCH information change notification indication;
an MCCH information change notification configuration;
non-MBMS resource allocation information; and
working mode information.

According to the third possible implementation manner of the second aspect, in a fourth possible implementation manner of the second aspect, the working mode information includes at least one of the following information:
spatial multiplexing configuration information;
reference signal configuration information; and
transmission mode configuration information.

According to the second aspect or any one of the first to fourth possible implementation manners of the second aspect possible implementation manner of the second aspect, after the sending, by the base station corresponding to the LCT cell, the system message to user equipment UE, the method further includes:
sending, by the base station corresponding to the LCT cell, a physical downlink control channel PDCCH of the LCT cell to the UE, where the PDCCH is used for indicating an MCCH information change notification of the NCT cell.

According to the fifth possible implementation manner of the second aspect, in a sixth possible implementation manner of the second aspect, before the sending, by the base station corresponding to the LCT cell, a physical downlink control channel PDCCH of the LCT cell to the UE, the method further includes:
receiving, by the base station corresponding to the LCT cell, MBMS session start indication information, of the NCT cell, sent by the MCE.

With reference to the fifth or sixth possible implementation manner of the second aspect, in a seventh possible implementation manner of the second aspect, that the PDCCH is used for indicating an MCCH information change notification of the NCT cell includes one of the following:
using a reserved bit of downlink control information DCI 1C to indicate the MCCH information change notification of the NCT cell;
using bits of DCI 0, 1, 1A, 1B, 1D, 2, 2A, 2B, 2C, 3, 3A, and 4 to indicate the MCCH information change notification of the NCT cell; and
using DCI scrambled with a first MBMS-radio network temporary identifier M-RNTI to indicate the MCCH information change notification of the NCT cell, where the first M-RNTI corresponds to the MCCH information change notification.

With reference to the fifth or sixth possible implementation manner of the second aspect, in an eighth possible implementation manner of the second aspect, the MCCH information change notification uses a bit in DCI to indicate an NCT carrier or an MBSFN area where MCCH information is changed; and
the MBMS configuration information of the NCT cell further includes an extended MCCH information change notification configuration, where the extended MCCH change notification configuration information is used for indicating an MBSFN area, where an MCCH is changed, in the NCT carrier.

With reference to the second aspect or any one of the first to eighth possible implementation manners of the second aspect, in a ninth possible implementation manner of the second aspect, after the sending, by the base station corresponding to the LCT cell, the system message to user equipment UE, the method further includes:
sending, by the base station corresponding to the LCT cell, MBSFN area configuration information of the NCT cell to the UE.

According to the ninth possible implementation manner of the second aspect, in a tenth possible implementation manner of the second aspect, the MBSFN area configuration information of the NCT cell is tagged by using a reserved logical channel identifier LCID; or
the MBSFN area configuration information of the NCT cell is carried by using a newly configured MBSFN subframe resource, and the MBMS configuration information of the NCT cell further includes a configuration of the newly configured MBSFN subframe resource.

With reference to the ninth or tenth possible implementation manner of the second aspect, in an eleventh possible implementation manner of the second aspect, before the sending, by the base station corresponding to the LCT cell, MBSFN area configuration information of the NCT cell to the UE, the method further includes:
receiving, by the base station corresponding to the LCT cell, the MBSFN area configuration information, of the NCT cell, sent by the MCE.

According to a third aspect of the present invention, a service processing method for a new carrier type cell is provided, including:
generating, by a base station corresponding to a new carrier type NCT cell, multimedia broadcast multicast Service MBMS configuration information of the NCT cell; and
sending, by the base station corresponding to the NCT cell, the MBMS configuration information to a base station corresponding to a legacy carrier type LCT cell, so that the base station corresponding to the LCT cell generates a system message including the MBMS configuration information of the NCT cell according to the MBMS configuration information and sends the system message to user equipment UE.

In a first possible implementation manner of the third aspect, the sending, by the base station corresponding to the NCT cell, the MBMS configuration information to a base station corresponding to a legacy carrier type LCT cell includes:
sending, by the base station corresponding to the NCT cell, the MBMS configuration information of the NCT cell to a multi-cell/multicast coordination entity MCE, so that the MCE sends the MBMS configuration information of the NCT cell to the base station corresponding to the LCT cell.

With reference to the third aspect or the first possible implementation manner of the third aspect, in a second possible implementation manner of the third aspect, the MBMS configuration information of the NCT cell includes the following information:
NCT cell identifier information or NCT carrier identifier information;
multimedia broadcast multicast service single frequency network MBSFN area identifier information; and
multicast control channel MCCH configuration information.

According to the second possible implementation manner of the third aspect, in a third possible implementation manner of the third aspect, the MBMS configuration information of the NCT cell further includes at least one of the following information:
an MCCH information change notification indication;
an MCCH information change notification configuration;
non-MBMS resource allocation information; and
working mode information.

According to the third possible implementation manner of the third aspect, in a fourth possible implementation manner of the third aspect, the working mode information includes at least one of the following information:
spatial multiplexing configuration information;
reference signal configuration information; and
transmission mode configuration information.

With reference to the third aspect or any one of the first to fourth possible implementation manners of the third aspect, in a fifth possible implementation manner of the third aspect, after the sending, by the base station corresponding to the NCT cell, the MBMS configuration information to a base station corresponding to a legacy carrier type LCT cell, the method further includes:
sending, by the base station corresponding to the NCT cell, a physical downlink control channel PDCCH of the NCT cell to the UE, where the PDCCH is used for indicating an MCCH information change notification of the NCT cell.

According to the fifth possible implementation manner of the third aspect, in a sixth possible implementation manner of the third aspect, the PDCCH includes an MCCH information change notification scrambled by using an MBMS-radio network temporary identifier M-RNTI.

With reference to the fifth or sixth possible implementation manner of the third aspect, in a seventh possible implementation manner of the third aspect, after the sending, by the base station corresponding to the NCT cell, the MBMS configuration information to a base station corresponding to a legacy carrier type LCT cell, the method further includes:
sending, by the base station corresponding to the NCT cell, MBSFN area configuration information of the NCT cell to the UE.

According to the seventh possible implementation manner of the third aspect, in an eighth possible implementation manner of the third aspect, before the sending, by the base station corresponding to the NCT cell, MBSFN area configuration information of the NCT cell to the UE, the method further includes:
receiving, by the base station corresponding to the NCT cell, the MBSFN area configuration information, of the NCT cell, sent by the MCE.

With reference to the seventh or eighth possible implementation manner of the third aspect, in a ninth possible implementation manner of the third aspect, after the sending, by the base station corresponding to the NCT cell, MBSFN area configuration information of the NCT cell to the UE, the method further includes:
sending, by the base station corresponding to the NCT cell, multicast channel scheduling information MSI and a multicast service channel MTCH of the NCT cell to the UE.

According to a fourth aspect of the present invention, a service processing method for a new carrier type cell is provided, including:
receiving, by a multi-cell/multicast coordination entity MCE, MBMS configuration information, of a new carrier type NCT cell, sent by a base station corresponding to the NCT cell; and
sending, by the MCE, the MBMS configuration information to a base station corresponding to a legacy carrier type LCT cell, so that the base station corresponding to the LCT cell generates a system message including the MBMS configuration information of the NCT cell according to the MBMS configuration information and sends the system message to user equipment UE.

In a first possible implementation manner of the fourth aspect, the MBMS configuration information of the NCT cell includes the following information:
NCT cell identifier information or NCT carrier identifier information;
multimedia broadcast multicast service single frequency network MBSFN area identifier information; and
multicast control channel MCCH configuration information.

According to the first possible implementation manner of the fourth aspect, in a second possible implementation manner of the fourth aspect, the MBMS configuration information of the NCT cell further includes at least one of the following information:
an MCCH information change notification indication;
an MCCH information change notification configuration;
non-MBMS resource allocation information; and
working mode information.

According to the second possible implementation manner of the fourth aspect, in a third possible implementation manner of the fourth aspect, the working mode information includes at least one of the following information:
spatial multiplexing configuration information;
reference signal configuration information; and
transmission mode configuration information.

With reference to the fourth aspect or any one of the first to third possible implementation manners of the fourth aspect, in a fourth possible implementation manner of the fourth aspect, after the sending, by the MCE, the MBMS configuration information to a base station corresponding to a legacy carrier type LCT cell, the method further includes:
sending, by the MCE, MBMS session start indication information of the NCT cell to the base station corresponding to the LCT cell, so that the base station corresponding to the LCT cell sends a physical downlink control channel PDCCH of the LCT cell to the UE, where the PDCCH is used for indicating an MCCH information change notification of the NCT cell; or
sending, by the MCE, MBMS session start indication information of the NCT cell to the base station corresponding to the NCT cell, so that the base station corresponding to the NCT cell sends a PDCCH of the NCT cell to the UE, where the PDCCH is used for indicating an MCCH information change notification of the NCT cell.

According to the fourth possible implementation manner of the fourth aspect, in a fifth possible implementation manner of the fourth aspect, that the PDCCH of the LCT cell is used for indicating an MCCH information change notification of the NCT cell includes one of the following:
using a reserved bit of downlink control information DCI 1C to indicate the MCCH information change notification of the NCT cell;
using bits of DCI 0, 1, 1A, 1B, 1D, 2, 2A, 2B, 2C, 3, 3A, and 4 to indicate the MCCH information change notification of the NCT cell; and
using DCI scrambled with a first MBMS-radio network temporary identifier M-RNTI to indicate the MCCH information change notification of the NCT cell, where the first M-RNTI corresponds to the MCCH information change notification; and
the PDCCH of the NCT cell includes an MCCH information change notification scrambled by using an M-RNTI.

With reference to the fourth aspect or any one of the first to fifth possible implementation manners of the fourth aspect, in a sixth possible implementation manner of the fourth aspect, after the sending, by the MCE, the MBMS configuration information to a base station corresponding to a legacy carrier type LCT cell, the method further includes:
sending, by the MCE, MBSFN area configuration information of the NCT cell to the base station corresponding to the LCT cell, so that the base station corresponding to the LCT cell sends the MBSFN area configuration information of the NCT cell to the UE; or
sending, by the MCE, MBSFN area configuration information of the NCT cell to the base station corresponding to the NCT cell, so that the base station corresponding to the NCT cell sends the MBSFN area configuration information of the NCT cell to the UE.

According to a fifth aspect of the present invention, user equipment is provided, including:
a first receiving module, configured to receive a system message sent by a base station corresponding to a legacy carrier type LCT cell, where the system message includes multimedia broadcast multicast Service MBMS configuration information of a new carrier type NCT cell; and
a first processing module, configured to perform service configuration processing on an MBMS of the NCT cell according to the MBMS configuration information of the NCT cell.

In a first possible implementation manner of the fifth aspect, the MBMS configuration information of the NCT cell includes the following information:
NCT cell identifier information or NCT carrier identifier information;
multimedia broadcast multicast service single frequency network MBSFN area identifier information; and
multicast control channel MCCH configuration information.

According to the first possible implementation manner of the fifth aspect, in a second possible implementation manner of the fifth aspect, the MBMS configuration information of the NCT cell further includes at least one of the following information:
an MCCH information change notification indication;
an MCCH information change notification configuration;
non-MBMS resource allocation information; and
working mode information.

According to the second possible implementation manner of the fifth aspect, in a third possible implementation manner of the fifth aspect, the working mode information includes at least one of the following information:
spatial multiplexing configuration information;
reference signal configuration information; and
transmission mode configuration information.

With reference to the fifth aspect or any one of the first to third possible implementation manners of the fifth aspect, in a fourth possible implementation manner of the fifth aspect, the first receiving module is further configured to: after receiving the system message sent by the base station corresponding to the legacy carrier type LCT cell, receive a physical downlink control channel PDCCH, of the LCT cell, sent by the base station corresponding to the LCT cell, where the PDCCH is used for indicating an MCCH information change notification of the NCT cell.

According to the fourth possible implementation manner of the fifth aspect, in a fifth possible implementation manner of the fifth aspect, that the PDCCH is used for indicating an MCCH information change notification of the NCT cell includes one of the following:
using a reserved bit of downlink control information DCI 1C to indicate the MCCH information change notification of the NCT cell;
using bits of DCI 0, 1, 1A, 1B, 1D, 2, 2A, 2B, 2C, 3, 3A, and 4 to indicate the MCCH information change notification of the NCT cell; and
using DCI scrambled with a first MBMS-radio network temporary identifier M-RNTI to indicate the MCCH information change notification of the NCT cell, where the first M-RNTI corresponds to the MCCH information change notification.

According to the fourth possible implementation manner of the fifth aspect, in a sixth possible implementation manner of the fifth aspect, the MCCH information change notification uses a bit in DCI to indicate an NCT carrier or an MBSFN area where MCCH information is changed; and
the MBMS configuration information of the NCT cell further includes an extended MCCH information change notification configuration, where the extended MCCH change notification configuration information is used for indicating an MBSFN area, where the MCCH information is changed, in the NCT carrier.

With reference to the fifth aspect or any one of the first to third possible implementation manners of the fifth aspect, in a seventh possible implementation manner of the fifth aspect, the first receiving module is further configured to: after receiving the system message sent by the base station corresponding to the legacy carrier type LCT cell, receive a PDCCH, of the NCT cell, sent by a base station corresponding to the NCT cell, where the PDCCH is used for indicating an MCCH information change notification of the NCT cell.

According to the seventh possible implementation manner of the fifth aspect, in an eighth possible implementation manner of the fifth aspect, the PDCCH includes an MCCH information change notification scrambled by using an M-RNTI.

With reference to the fifth aspect or any one of the first to eighth possible implementation manners of the fifth aspect, in a ninth possible implementation manner of the fifth aspect, the first receiving module is further configured to: after receiving the system message sent by the base station corresponding to the legacy carrier type LCT cell, receive MBSFN area configuration information, of the NCT cell, sent by the base station corresponding to the NCT cell; or
receive MBSFN area configuration information, of the NCT cell, sent by the base station corresponding to the LCT cell.

According to the ninth possible implementation manner of the fifth aspect, in a tenth possible implementation manner of the fifth aspect, the first receiving module is further configured to: after receiving the MBSFN area configuration information, receive multicast channel scheduling information MSI and a multicast service channel MTCH, of the NCT cell, sent by the base station corresponding to the NCT cell.

According to a sixth aspect of the present invention, a base station corresponding to a legacy carrier type cell is provided, including:
a second processing module, configured to generate a system message, where the system message includes multimedia broadcast multicast Service MBMS configuration information of a new carrier type NCT cell; and
a first sending module, configured to send the system message to user equipment UE, so that the UE performs service configuration processing on an MBMS of the NCT cell according to the MBMS configuration information of the NCT cell.

In a first possible implementation manner of the sixth aspect, the base station further includes:
a second receiving module, configured to: before the system message is generated, receive the MBMS configuration information, of the NCT cell, sent by a base station corresponding to the NCT cell or a multi-cell/multicast coordination entity MCE.

With reference to the sixth aspect or the first possible implementation manner of the sixth aspect, in a second possible implementation manner of the sixth aspect, the MBMS configuration information of the NCT cell includes the following information:
NCT cell identifier information or NCT carrier identifier information;
multimedia broadcast multicast service single frequency network MBSFN area identifier information; and
multicast control channel MCCH configuration information.

According to the second possible implementation manner of the sixth aspect, in a third possible implementation manner of the sixth aspect, the MBMS configuration information of the NCT cell further includes at least one of the following information:
an MCCH information change notification indication;
an MCCH information change notification configuration;
non-MBMS resource allocation information; and
working mode information.

According to the third possible implementation manner of the sixth aspect, in a fourth possible implementation manner of the sixth aspect, the working mode information includes at least one of the following information:
spatial multiplexing configuration information;
reference signal configuration information; and
transmission mode configuration information.

According to the sixth aspect or any one of the first to fourth possible implementation manners of the sixth aspect , in a fifth possible implementation manner of the sixth aspect, the first sending module is further configured to: after sending the system message to the user equipment UE, send a physical downlink control channel PDCCH of a legacy carrier type LCT cell to the UE, where the PDCCH is used for indicating an MCCH information change notification of the NCT cell.

According to the fifth possible implementation manner of the sixth aspect, in a sixth possible implementation manner of the sixth aspect, the second receiving module is further configured to: before the physical downlink control channel PDCCH of the legacy carrier type LCT cell is sent to the UE, receive MBMS session start indication information, of the NCT cell, sent by the MCE.

With reference to the fifth or sixth possible implementation manner of the sixth aspect, in a seventh possible implementation manner of the sixth aspect, that the PDCCH is used for indicating an MCCH information change notification of the NCT cell includes one of the following:
using a reserved bit of downlink control information DCI 1C to indicate the MCCH information change notification of the NCT cell;
using bits of DCI 0, 1, 1A, 1B, 1D, 2, 2A, 2B, 2C, 3, 3A, and 4 to indicate the MCCH information change notification of the NCT cell; and
using DCI scrambled with a first MBMS-radio network temporary identifier M-RNTI to indicate the MCCH information change notification of the NCT cell, where the first M-RNTI corresponds to the MCCH information change notification.

With reference to the fifth or sixth possible implementation manner of the sixth aspect, in an eighth possible implementation manner of the sixth aspect, the MCCH information change notification uses a bit in DCI to indicate an NCT carrier or an MBSFN area where MCCH information is changed; and
the MBMS configuration information of the NCT cell further includes an extended MCCH information change notification configuration, where the extended MCCH change notification configuration information is used for indicating an MBSFN area, where an MCCH is changed, in the NCT carrier.

With reference to the sixth aspect or any one of the first to eighth possible implementation manners of the sixth aspect, in a ninth possible implementation manner of the sixth aspect, the first sending module is further configured to: after sending the system message to the user equipment UE, send MBSFN area configuration information of the NCT cell to the UE.

According to the ninth possible implementation manner of the sixth aspect, in a tenth possible implementation manner of the sixth aspect, the MBSFN area configuration information of the NCT cell is tagged by using a reserved logical channel identifier LCID; or
the MBSFN area configuration information of the NCT cell is carried by using a newly configured MBSFN subframe resource, and the MBMS configuration information of the NCT cell further includes a configuration of the newly configured MBSFN subframe resource.

With reference to the ninth or tenth possible implementation manner of the sixth aspect, in an eleventh possible implementation manner of the sixth aspect, the second receiving module is further configured to: before the MBSFN area configuration information of the NCT cell is sent to the UE, receive the MBSFN area configuration information, of the NCT cell, sent by the MCE.

According to a seventh aspect of the present invention, a base station corresponding to a new carrier type cell is provided, including:
a third processing module, configured to generate multimedia broadcast multicast Service MBMS configuration information of a new carrier type NCT cell; and
a second sending module, configured to send the MBMS configuration information to a base station corresponding to a legacy carrier type LCT cell, so that the base station corresponding to the LCT cell generates a system message including the MBMS configuration information of the NCT cell according to the MBMS configuration information and sends the system message to user equipment UE.

In a first possible implementation manner of the seventh aspect, the second sending module is specifically configured to:
send the MBMS configuration information of the NCT cell to a multi-cell/multicast coordination entity MCE, so that the MCE sends the MBMS configuration information of the NCT cell to the base station corresponding to the LCT cell.

With reference to the seventh aspect or the first possible implementation manner of the seventh aspect, in a second possible implementation manner of the seventh aspect, the MBMS configuration information of the NCT cell includes the following information:
NCT cell identifier information or NCT carrier identifier information;
multimedia broadcast multicast service single frequency network MBSFN area identifier information; and
multicast control channel MCCH configuration information.

According to the second possible implementation manner of the seventh aspect, in a third possible implementation manner of the seventh aspect, the MBMS configuration information of the NCT cell further includes at least one of the following information:
an MCCH information change notification indication;
an MCCH information change notification configuration;
non-MBMS resource allocation information; and
working mode information.

According to the third possible implementation manner of the seventh aspect, in a fourth possible implementation manner of the seventh aspect, the working mode information includes at least one of the following information:
spatial multiplexing configuration information;
reference signal configuration information; and
transmission mode configuration information.

With reference to the seventh aspect or any one of the first to fourth possible implementation manners of the seventh aspect, in a fifth possible implementation manner of the seventh aspect, the second sending module is further configured to: after sending the MBMS configuration information to the base station corresponding to the legacy carrier type LCT cell, send a physical downlink control channel PDCCH of the NCT cell to the UE, where the PDCCH is used for indicating an MCCH information change notification of the NCT cell.

According to the fifth possible implementation manner of the seventh aspect, in a sixth possible implementation manner of the seventh aspect, the PDCCH includes an MCCH information change notification scrambled by using an MBMS-radio network temporary identifier M-RNTI.

With reference to the fifth or sixth possible implementation manner of the seventh aspect, in a seventh possible implementation manner of the seventh aspect, the second sending module is further configured to: after sending the MBMS configuration information to the base station corresponding to the legacy carrier type LCT cell, send MBSFN area configuration information of the NCT cell to the UE.

According to the seventh possible implementation manner of the seventh aspect, in an eighth possible implementation manner of the seventh aspect, the base station further includes:
a third receiving module, configured to: before the MBSFN area configuration information of the NCT cell is sent to the UE, receive the MBSFN area configuration information, of the NCT cell, sent by the MCE.

With reference to the seventh or eighth possible implementation manner of the seventh aspect, in a ninth possible implementation manner of the seventh aspect, the second sending module is further configured to: after sending the MBSFN area configuration information of the NCT cell to the UE, send multicast channel scheduling information MSI and a multicast service channel MTCH of the NCT cell to the UE.

According to an eighth aspect of the present invention, a multi-cell/multicast coordination entity is provided, including:
a fourth receiving module, configured to receive MBMS configuration information, of a new carrier type NCT cell, sent by a base station corresponding to the NCT cell; and
a third sending module, configured to send the MBMS configuration information to a base station corresponding to a legacy carrier type LCT cell, so that the base station corresponding to the LCT cell generates a system message including the MBMS configuration information of the NCT cell according to the MBMS configuration information and sends the system message to user equipment UE.

In a first possible implementation manner of the eighth aspect, the MBMS configuration information of the NCT cell includes the following information:
NCT cell identifier information or NCT carrier identifier information;
multimedia broadcast multicast service single frequency network MBSFN area identifier information; and
multicast control channel MCCH configuration information.

According to the first possible implementation manner of the eighth aspect, in a second possible implementation manner of the eighth aspect, the MBMS configuration information of the NCT cell further includes at least one of the following information:
an MCCH information change notification indication;
an MCCH information change notification configuration;
non-MBMS resource allocation information; and
working mode information.

According to the second possible implementation manner of the eighth aspect, in a third possible implementation manner of the eighth aspect, the working mode information includes at least one of the following information:
spatial multiplexing configuration information;
reference signal configuration information; and
transmission mode configuration information.

With reference to the eighth aspect or any one of the first to third possible implementation manners of the eighth aspect, in a fourth possible implementation manner of the eighth aspect, the third sending module is further configured to: after sending the MBMS configuration information to the base station corresponding to the legacy carrier type LCT cell, send MBMS session start indication information of the NCT cell to the base station corresponding to the LCT cell, so that the base station corresponding to the LCT cell sends a physical downlink control channel PDCCH of the LCT cell to the UE, where the PDCCH is used for indicating an MCCH information change notification of the NCT cell; or
send MBMS session start indication information of the NCT cell to the base station corresponding to the NCT cell, so that the base station corresponding to the NCT cell sends a PDCCH of the NCT cell to the UE, where the PDCCH is used for indicating an MCCH information change notification of the NCT cell.

According to the fourth possible implementation manner of the eighth aspect, in a fifth possible implementation manner of the eighth aspect, that the PDCCH of the LCT cell is used for indicating an MCCH information change notification of the NCT cell includes one of the following:
using a reserved bit of downlink control information DCI 1C to indicate the MCCH information change notification of the NCT cell;
using bits of DCI 0, 1, 1A, 1B, 1D, 2, 2A, 2B, 2C, 3, 3A, and 4 to indicate the MCCH information change notification of the NCT cell; and
using DCI scrambled with a first MBMS-radio network temporary identifier M-RNTI to indicate the MCCH information change notification of the NCT cell, where the first M-RNTI corresponds to the MCCH information change notification; and
the PDCCH of the NCT cell includes an MCCH information change notification scrambled by using an M-RNTI.

With reference to the eighth aspect or any one of the first to fifth possible implementation manners of the eighth aspect, in a sixth possible implementation manner of the eighth aspect, the third sending module is further configured to: after sending the MBMS configuration information to the base station corresponding to the legacy carrier type LCT cell, send MBSFN area configuration information of the NCT cell to the base station corresponding to the LCT cell, so that the base station corresponding to the LCT cell sends the MBSFN area configuration information of the NCT cell to the UE; or
send MBSFN area configuration information of the NCT cell to the base station corresponding to the NCT cell, so that the base station corresponding to the NCT cell sends the MBSFN area configuration information of the NCT cell to the UE.

According to a ninth aspect of the present invention, user equipment is provided, including: a transmitter, a receiver, a memory, and a processor that is separately connected to the transmitter, the receiver, and the memory, where the memory stores a group of program code, and the processor is configured to invoke the program code stored in the memory, to execute the method according to the first aspect or any one possible implementation manner of the first aspect.

According to a tenth aspect of the present invention, a base station corresponding to a legacy carrier type cell is provided, including: a transmitter, a receiver, a memory, and a processor that is separately connected to the transmitter, the receiver, and the memory, where the memory stores a group of program code, and the processor is configured to invoke the program code stored in the memory, to execute the method according to the second aspect or any one possible implementation manner of the second aspect.

According to an eleventh aspect of the present invention, a base station corresponding to a new carrier type cell is provided, including: a transmitter, a receiver, a memory, and a processor that is separately connected to the transmitter, the receiver, and the memory, where the memory stores a group of program code, and the processor is configured to invoke the program code stored in the memory, to execute the method according to the third aspect or any one possible implementation manner of the third aspect.

According to a twelfth aspect of the present invention, a multi-cell/multicast coordination entity is provided, including: a transmitter, a receiver, a memory, and a processor that is separately connected to the transmitter, the receiver, and the memory, where the memory stores a group of program code, and the processor is configured to invoke the program code stored in the memory, to execute the method according to the fourth aspect or any one possible implementation manner of the fourth aspect.

According to a thirteenth aspect of the present invention, a communications system is provided, including: the base station corresponding to a legacy carrier type cell according to the sixth aspect or any one possible implementation manner of the sixth aspect or according to the tenth aspect, the base station corresponding to a new carrier type cell according to the seventh aspect or any one possible implementation manner of the seventh aspect or according to the eleventh aspect, and the multi-cell/multicast coordination entity according to the eighth aspect or any one possible implementation manner of the eighth aspect or according to the twelfth aspect.

In the data processing method for a new carrier type cell, the apparatus, and the communications system that are provided in the embodiments of the present invention, UE receives a system message sent by a base station corresponding to an LCT cell, where the system message includes MBMS configuration information of an NCT cell, and the UE then performs service configuration processing on an MBMS of the NCT cell according to the MBMS configuration information of the NCT cell, which can implement support of an NCT cell for an MBMS, and extend application scenarios of an MBMS.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a flowchart of Embodiment 1 of a service processing method for a new carrier type cell according to the present invention;
FIG. 2 is a flowchart of Embodiment 2 of a service processing method for a new carrier type cell according to the present invention;
FIG. 3 is a flowchart of Embodiment 3 of a service processing method for a new carrier type cell according to the present invention;
FIG. 4 is a flowchart of Embodiment 4 of a service processing method for a new carrier type cell according to the present invention;
FIG. 5 is a flowchart of Embodiment 5 of a service processing method for a new carrier type cell according to the present invention;
FIG. 6 is a flowchart of Embodiment 6 of a service processing method for a new carrier type cell according to the present invention;
FIG. 7 is a flowchart of Embodiment 7 of a service processing method for a new carrier type cell according to the present invention;
FIG. 8 is a schematic structural diagram of Embodiment 1 of user equipment according to the present invention;
FIG. 9 is a schematic structural diagram of Embodiment 2 of user equipment according to the present invention;
FIG. 10 is a schematic structural diagram of Embodiment 1 of a base station corresponding to a legacy carrier type cell according to the present invention;
FIG. 11 is a schematic structural diagram of Embodiment 2 of a base station corresponding to a legacy carrier type cell according to the present invention;
FIG. 12 is a schematic structural diagram of Embodiment 3 of a base station corresponding to a legacy carrier type cell according to the present invention;
FIG. 13 is a schematic structural diagram of Embodiment 1 of a base station corresponding to a new carrier type cell according to the present invention;
FIG. 14 is a schematic structural diagram of Embodiment 2 of a base station corresponding to a new carrier type cell according to the present invention;
FIG. 15 is a schematic structural diagram of Embodiment 3 of a base station corresponding to a new carrier type cell according to the present invention;
FIG. 16 is a schematic structural diagram of Embodiment 1 of a multi-cell/multicast coordination entity according to the present invention;
FIG. 17 is a schematic structural diagram of Embodiment 2 of a multi-cell/multicast coordination entity according to the present invention; and
FIG. 18 is a schematic structural diagram of Embodiment 1 of a communications system according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions provided in the present invention relate to an LTE system, and further relate to an LTE system in which an NCT cell is introduced in an access network. An NCT cell cannot work independently. For example, an LCT cell can send a system message, while a system message is not sent on an NCT cell. That is, an NCT cell must depend on an existing non-NCT LCT cell. Multiple NCT cells may be configured for one LCT cell. A scenario to which the present invention is applicable is that user equipment (referred to as UE in short) receives an MBMS service of an NCT cell by using an LCT cell, and the LCT cell and the NCT cell may belong to a same base station or may belong to different base stations, where the LCT cell or the NCT cell can acquire MBMS configuration information of the NCT cell by means of information exchange with a multi-cell/multicast coordination entity (referred to as MCE in short).

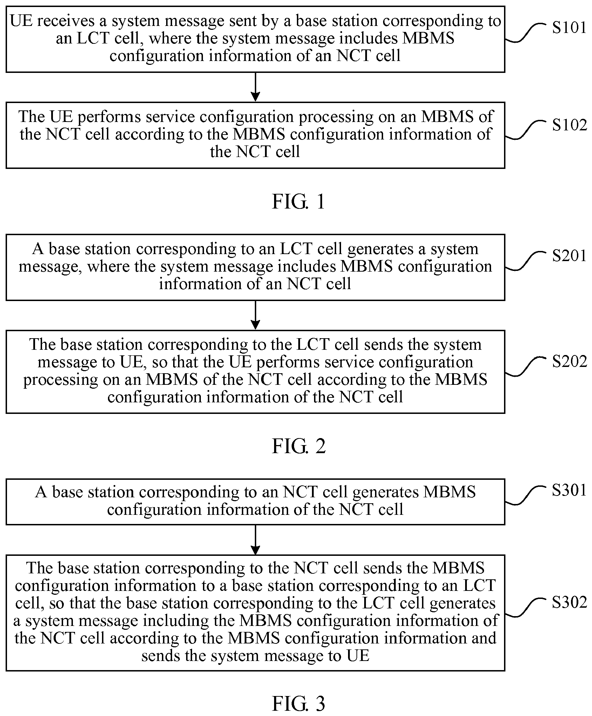

FIG. 1 is a flowchart of Embodiment 1 of a service processing method for a new carrier type cell provided in the present invention. As shown in FIG. 1, the service processing method for a new carrier type cell in this embodiment includes:
S101: UE receives a system message sent by a base station corresponding to an LCT cell, where the system message includes MBMS configuration information of an NCT cell.

Specifically, the LCT cell may be a legacy carrier cell on which the NCT cell depends. The NCT cell cannot send a system message, where the system message in this embodiment may be a broadcast message, and therefore, if the LCT cell and the NCT cell belong to a same base station, the base station can send the MBMS configuration information of the NCT cell to the UE according to a correlation between the LCT cell and the NCT cell, where he correlation is used for indicating an NCT cell that can be used at the same time when the UE camps on the LCT cell; or if the LCT cell and the NCT cell belong to different base stations, the base station corresponding to the LCT cell can receive the MBMS configuration information, of the NCT cell, sent by an MCE. In a scenario in which the MCE is not clear about the correlation between the LCT cell and the NCT cell, the base station corresponding to the LCT cell needs to include identifier information, of all related NCT cells, in request information sent to the MCE, and the MCE needs to include MBMS configuration information, of an NCT cell correlated to the LCT cell, in feedback information sent to the base station corresponding to the LCT cell.

The MBMS configuration information of the NCT cell may be carried in a system information block (referred to as SIB in short) 13, an SIB 15 or a newly defined SIB of the system message.

Multiple NCT cells may be configured for one LCT cell, and therefore the system message sent to the UE by the base station corresponding to the LCT cell may include configuration information of multiple NCT cells. A specific format may be, for example, an "MBMS-NCT list".

Optionally, MBMS configuration information of one NCT cell in the "MBMS-NCT list" may include the following information:
NCT cell identifier information or NCT carrier identifier information;
multimedia broadcast multicast service single frequency network (referred to as MBSFN in short) area identifier information; and
multicast control channel (referred to as MCCH in short) configuration information.

The NCT cell identifier information may be an NCT cell ID or an NCT cell ID list, and the NCT carrier identifier information may be an NCT carrier ID or an NCT carrier ID list.

In an MBMS, a single frequency network (referred to as SFN in short) transmission manner, namely an MBSFN transmission manner, is introduced in an access network. In the MBSFN transmission manner, synchronous transmission is performed on multiple cells at a same frequency at a same time. Use of such a transmission manner can save a frequency resource and improve spectrum utilization. An MBSFN area refers to a group of cells that implement MBSFN transmission by means of coordination. For UE that receives MBSFN transmission, the entire MBSFN area is considered as an MBSFN cell.

The MBSFN area identifier information may be an MBSFN area or an MBSFN area information list. The MBSFN area information list may include at least one piece of MBSFN area information. The MBSFN area information includes an MBSFN area identifier and MBSFN area MBMS configuration information. To save a transmission resource, the MBSFN area information may not include the MBSFN area MBMS configuration information. If the MBSFN area information does not include the MBSFN area MBMS configuration information, it is considered that the MBSFN area MBMS configuration information of the MBSFN area is the same as MBSFN area MBMS configuration information of a previous piece of MBSFN area information. In another implementation manner, the MBMS configuration information of the NCT cell additionally includes one piece of indication information for indicating which list element is the same as the MBMS configuration information of the NCT cell or that the MBMS configuration information of the NCT cell is the same as a configuration of an LCT cell.

The MCCH configuration information is used for informing a terminal of how to acquire an MCCH message, including a time of acquiring an MCCH message and a modulation and coding manner that is used.

Furthermore, the MBMS configuration information of the NCT cell further includes at least one of the following information:
an MCCH information change notification indication;
an MCCH information change notification configuration;
non-MBMS resource allocation information; and
working mode information.

The MCCH information change notification indication is used for representing which bit in information carrying an MCCH change notification corresponds to an MCCH information change notification of an MBSFN area.

The MCCH information change notification configuration is used for indicating a resource carrying the MCCH information change notification.

Specifically, if MCCH information change notification configurations of an NCT cell and an LCT cell are the same, MBMS configuration information of the NCT cell does not need to include the MCCH information change notification configuration of the NCT cell, and the LCT cell sends the MCCH information change notification configuration of the LCT cell to the UE. If the MCCH information change notification configurations of the NCT cell and the LCT cell are different, the MBMS configuration information of the NCT cell further needs to include an "MCCH information change notification configuration". If multiple NCT cells supporting an MBMS are configured for the LCT cell, and MCCH information change notification configurations of the multiple NCT cells are different, MBMS configuration information of the NCT cells includes respective "MCCH information change notification configurations". If the MCCH information change notification configurations of the multiple NCT cells configured for the LCT cell are the same, the MBMS configuration information of the NCT cells only needs to include one "MCCH information change notification configuration".

The non-MBMS resource allocation information is used for indicating a quantity of symbols occupied by a physical downlink control channel (referred to as PDCCH in short) in an MBSFN subframe.

The non-MBMS resource allocation information is optional, and needs to be included only when the NCT cell divides an MBSFN subframe into a resource for use by a non-MBMS. If the non-MBMS resource allocation information is not included, all symbols of an MBSFN subframe are used for transmitting a physical multicast channel (referred to as PMCH in short).

The working mode information may be one working mode identifier or a specific working mode configuration, and optionally include at least one of the following information:
spatial multiplexing configuration information;
where specifically, the content may be included when an MBSFN area supports spatial multiplexing, and the content is, for example: a configuration sent in an MIMO manner, and if a same configuration is used in all MBSFN areas in the NCT cell, the information may be placed outside a list;
a reference signal (referred to as RS in short) configuration; and
a transmission mode (referred to as TM in short) configuration.
   S102: The UE performs service configuration processing on an MBMS of the NCT cell according to the MBMS configuration information of the NCT cell.

Specifically, the UE can perform service configuration processing on the MBMS of the NCT cell according to configuration information, of the NCT cell, included in received broadcast information. The service configuration processing may include receiving or reading information about and data of the MBMS according to the MBMS configuration information of the NCT cell, for example, reading MBSFN area configuration information of the NCT cell or listening to and detecting whether an MCCH in an MBSFN area is changed.

In this embodiment, because an NCT cell cannot send a system message, a base station to which an LCT cell on which the NCT cell depends belongs sends configuration information of the NCT cell to UE, so that the UE performs service configuration processing on an MBMS of the NCT cell, which can implement support of an NCT cell for an MBMS.

In the service processing method for a new carrier type cell provided in this embodiment, UE receives a system message sent by a base station corresponding to an LCT cell, where the system message includes MBMS configuration information of an NCT cell, and the UE then performs service configuration processing on an MBMS of the NCT cell according to the MBMS configuration information of the NCT cell, which can implement support of an NCT cell for an MBMS, and extend application scenarios of an MBMS.

Furthermore, after S101, the method may further include:
receiving, by the UE, a PDCCH, of the LCT cell, sent by the base station corresponding to the LCT cell, where the PDCCH is used for indicating an MCCH information change notification of the NCT cell.

Optionally, that the PDCCH is used for indicating an MCCH information change notification of the NCT cell includes one of the following:
using a reserved bit of downlink control information (referred to as DCI in short) 1C to indicate the MCCH information change notification of the NCT cell;
using bits of DCI 0, 1, 1A, 1B, 1D, 2, 2A, 2B, 2C, 3, 3A, and 4 to indicate the MCCH information change notification of the NCT cell; and
using DCI scrambled with a first MBMS-radio network temporary identifier (referred to as M-RNTI in short) to indicate the MCCH information change notification of the NCT cell, where the first M-RNTI corresponds to the MCCH information change notification.

Optionally, the MCCH information change notification of the NCT cell uses a bit in DCI to indicate an NCT carrier or an MBSFN area where MCCH information is changed; and
the MBMS configuration information of the NCT cell further includes an extended MCCH information change notification configuration, where the extended MCCH change notification configuration information is used for indicating an MBSFN area, where the MCCH information is changed, in the NCT carrier.

Furthermore, after S101, the method may further include:
receiving, by the UE, a PDCCH, of the NCT cell, sent by a base station corresponding to the NCT cell, where the PDCCH is used for indicating an MCCH information change notification of the NCT cell.

Optionally, the PDCCH includes an MCCH information change notification scrambled by using an M-RNTI.

Furthermore, after S101, the method further includes:
receiving, by the UE, MBSFN area configuration information, of the NCT cell, sent by the base station corresponding to the NCT cell; or
receiving, by the UE, MBSFN area configuration information, of the NCT cell, sent by the base station corresponding to the LCT cell.

Furthermore, after the receiving, by the UE, MBSFN area configuration information, the method further includes:
receiving, by the UE, MSI and an MTCH, of the NCT cell, sent by the base station corresponding to the NCT cell.

FIG. 2 is a flowchart of Embodiment 2 of a service processing method for a new carrier type cell provided in the present invention. As shown in FIG. 2, the service processing method for a new carrier type cell in this embodiment includes:
S201: A base station corresponding to an LCT cell generates a system message, where the system message includes MBMS configuration information of an NCT cell.

Specifically, if the MBMS configuration information of the NCT cell is the same as MBMS configuration information of the LCT cell, the LCT cell generates the system message according to the configuration information.

Optionally, before S201, the method may further include: receiving, by the base station corresponding to the LCT cell, the MBMS configuration information, of the NCT cell, sent by a base station corresponding to the NCT cell or an MCE.

If the MBMS configuration information of the NCT cell is different from the MBMS configuration information of the LCT cell, the LCT cell needs to first acquire configuration information of the NCT cell, and then generate the system message according to the MBMS configuration information of the NCT cell, where the MBMS configuration information of the NCT cell may be carried in feedback information sent by the MCE to the base station corresponding to the LCT cell.

In this embodiment, with regard to the description of the MBMS configuration information of the NCT cell, reference may be made to the embodiment shown in FIG. 1, and details are no longer provided herein.
S202: The base station corresponding to the LCT cell sends the system message to UE, so that the UE performs service configuration processing on an MBMS of the NCT cell according to the MBMS configuration information of the NCT cell.

In this embodiment, because an NCT cell cannot send a system message, a base station to which an LCT cell on which the NCT cell depends belongs sends configuration information of the NCT cell to UE, so that the UE performs service configuration processing on an MBMS of the NCT cell, which can implement support of an NCT cell for an MBMS.

In the service processing method for an NCT cell provided in this embodiment, a base station corresponding to an LCT cell generates a system message, where the system message includes MBMS configuration information of an NCT cell, and the base station corresponding to the LCT cell then sends the system message to UE, so that the UE performs service configuration processing on an MBMS of the NCT cell according to the MBMS configuration information of the NCT cell, which can implement support of an NCT cell for an MBMS, and extend application scenarios of an MBMS.

Furthermore, after S202, the method may further include:
sending, by the base station corresponding to the LCT cell, a PDCCH of the LCT cell to the UE, where the PDCCH is used for indicating an MCCH information change notification of the NCT cell.

Optionally, before the sending, by the base station corresponding to the LCT cell, an MCCH information change notification of the NCT cell to the UE, the method further includes:
receiving, by the base station corresponding to the LCT cell, MBMS session start indication information, of the NCT cell, sent by the MCE.

Optionally, that the PDCCH is used for indicating an MCCH information change notification of the NCT cell includes one of the following:
using a reserved bit of DCI 1C to indicate the MCCH information change notification of the NCT cell;
using bits of DCI 0, 1, 1A, 1B, 1D, 2, 2A, 2B, 2C, 3, 3A, and 4 to indicate the MCCH information change notification of the NCT cell; and
using DCI scrambled with a first M-RNTI to indicate the MCCH information change notification of the NCT cell, where the first M-RNTI corresponds to the MCCH information change notification.

Optionally, the MCCH information change notification uses a bit in DCI to indicate an NCT carrier or an MBSFN area where MCCH information is changed; and
the MBMS configuration information of the NCT cell further includes an extended MCCH information change notification configuration, where the extended MCCH change notification configuration information is used for indicating an MBSFN area, where an MCCH is changed, in the NCT carrier.

Furthermore, after S202, the method further includes:
sending, by the base station corresponding to the LCT cell, MBSFN area configuration information of the NCT cell to the UE.

Optionally, the MBSFN area configuration information of the NCT cell is tagged by using a reserved logical channel identifier LCID; or
the MBSFN area configuration information of the NCT cell is carried by using a newly configured MBSFN subframe resource, and the MBMS configuration information of the NCT cell further includes a configuration of the newly configured MBSFN subframe resource.

Optionally, before the sending, by the base station corresponding to the LCT cell, MBSFN area configuration information of the NCT cell to the UE, the method further includes:
receiving, by the base station corresponding to the LCT cell, the MBSFN area configuration information, of the NCT cell, sent by the MCE.

FIG. 3 is a flowchart of Embodiment 3 of a service processing method for a new carrier type cell provided in the present invention. As shown in FIG. 3, the service processing method for a new carrier type cell in this embodiment includes:
S301: A base station corresponding to an NCT cell generates MBMS configuration information of the NCT cell.
   In this embodiment, with regard to the description of the MBMS configuration information of the NCT cell, reference may be made to the embodiment shown in FIG. 1, and details are no longer provided herein.
S302: The base station corresponding to the NCT cell sends the MBMS configuration information to a base station corresponding to an LCT cell, so that the base station corresponding to the LCT cell generates a system message including the MBMS configuration information of the NCT cell according to the MBMS configuration information and sends the system message to UE.

Optionally, in another possible implementation manner, S302 may be: sending, by the base station corresponding to the NCT cell, the MBMS configuration information of the NCT cell to an MCE, so that the MCE sends the MBMS configuration information of the NCT cell to the base station corresponding to the LCT cell.

It may be understood that if the MBMS configuration information of the NCT cell is the same as MBMS configuration information of the LCT cell, the NCT cell may not send the MBMS configuration information to the LCT cell.

In this embodiment, because an NCT cell cannot send a system message, a base station to which an LCT cell on which the NCT cell depends belongs sends configuration information of the NCT cell to UE, so that the UE performs service configuration processing on an MBMS of the NCT cell, which can implement support of an NCT cell for an MBMS.

In the service processing method for an NCT cell provided in this embodiment, a base station corresponding to an NCT cell acquires MBMS configuration information, and the base station corresponding to the NCT cell then sends the MBMS configuration information to a base station corresponding to an LCT cell, so that the base station corresponding to the LCT cell generates a system message including the MBMS configuration information of the NCT cell according to the MBMS configuration information and sends the system message to UE, which can implement support of an NCT cell for an MBMS, and extend application scenarios of an MBMS.

Furthermore, after S302, the method further includes:
sending, by the base station corresponding to the NCT cell, a PDCCH of the NCT cell to the UE, where the PDCCH is used for indicating an MCCH information change notification of the NCT cell.

Optionally, the PDCCH includes an MCCH information change notification scrambled by using an M-RNTI.

Furthermore, after S302, the method may further include:
sending, by the base station corresponding to the NCT cell, MBSFN area configuration information of the NCT cell to the UE.

Optionally, before the sending, by the base station corresponding to the NCT cell, MBSFN area configuration information of the NCT cell to the UE, the method further includes:
receiving, by the base station corresponding to the NCT cell, the MBSFN area configuration information, of the NCT cell, sent by the MCE.

Optionally, after the sending, by the base station corresponding to the NCT cell, MBSFN area configuration information of the NCT cell to the UE, the method further includes:
sending, by the base station corresponding to the NCT cell, MSI and an MTCH of the NCT cell to the UE.

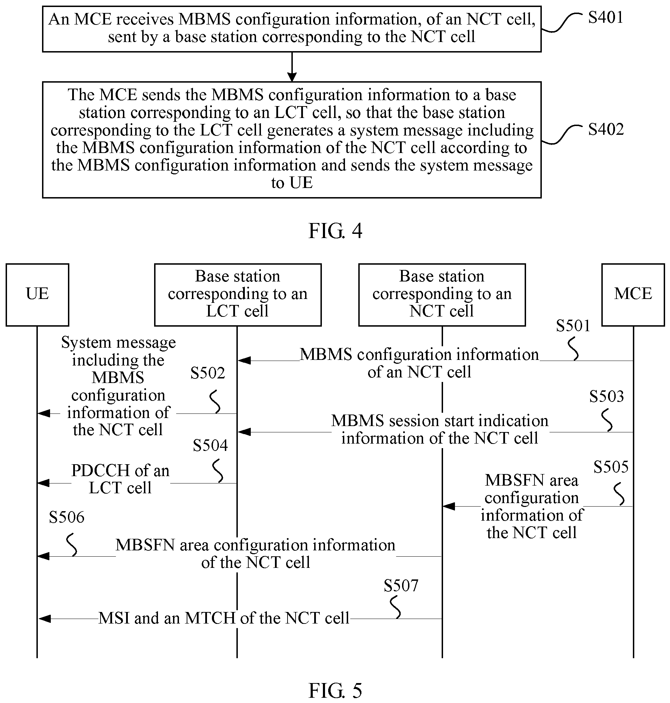

FIG. 4 is a flowchart of Embodiment 4 of a service processing method for a new carrier type cell provided in the present invention. As shown in FIG. 4, the service processing method for a new carrier type cell in this embodiment includes:
S401: An MCE receives MBMS configuration information, of an NCT cell, sent by a base station corresponding to the NCT cell.
   In this embodiment, with regard to the description of the MBMS configuration information of the NCT cell, reference may be made to the embodiment shown in FIG. 1, and details are no longer provided herein.
S402: The MCE sends the MBMS configuration information to a base station corresponding to an LCT cell, so that the base station corresponding to the LCT cell generates a system message including the MBMS configuration information of the NCT cell according to the MBMS configuration information and sends the system message to UE.

Specifically, the MBMS configuration information, of the NCT cell, sent by the MCE to the base station corresponding to the LCT cell may be included in feedback information sent by the MCE to the base station corresponding to the LCT cell.

In this embodiment, because an NCT cell cannot send a system message, a base station to which an LCT cell on which the NCT cell depends sends configuration information of the NCT cell to UE, so that the UE performs service configuration processing on an MBMS of the NCT cell, which can implement support of an NCT cell for an MBMS.

In the service processing method for an NCT cell provided in this embodiment, an MCE generates MBMS configuration information of an NCT cell, and then sends the MBMS configuration information to a base station corresponding to an LCT cell, so that the base station corresponding to the LCT cell generates a system message including the MBMS configuration information of the NCT cell according to the MBMS configuration information and sends the system message to UE, which can implement support of an NCT cell for an MBMS, and extend application scenarios of an MBMS.

Furthermore, after S402, the method may further include:
sending, by the MCE, MBMS session start indication information of the NCT cell to the base station corresponding to the LCT cell, so that the base station corresponding to the LCT cell sends a PDCCH of the LCT cell to the UE, where the PDCCH is used for indicating an MCCH information change notification of the NCT cell; or
sending, by the MCE, MBMS session start indication information of the NCT cell to the base station corresponding to the NCT cell, so that the base station corresponding to the NCT cell sends a PDCCH of the NCT cell to the UE, where the PDCCH is used for indicating an MCCH information change notification of the NCT cell.

Optionally, that the PDCCH of the LCT cell is used for indicating an MCCH information change notification of the NCT cell includes one of the following:
using a reserved bit of DCI 1C to indicate the MCCH information change notification of the NCT cell;
using bits of DCI 0, 1, 1A, 1B, 1D, 2, 2A, 2B, 2C, 3, 3A, and 4 to indicate the MCCH information change notification of the NCT cell; and
using DCI scrambled with a first M-RNTI to indicate the MCCH information change notification of the NCT cell, where the first M-RNTI corresponds to the MCCH information change notification; and
the PDCCH of the NCT cell includes an MCCH information change notification scrambled by using an M-RNTI.

Furthermore, after S402, the method may further include:
sending, by the MCE, MBSFN area configuration information of the NCT cell to the base station corresponding to the LCT cell, so that the base station corresponding to the LCT cell sends the MBSFN area configuration information of the NCT cell to the UE; or
sending, by the MCE, MBSFN area configuration information of the NCT cell to the base station corresponding to the NCT cell, so that the base station corresponding to the NCT cell sends the MBSFN area configuration information of the NCT cell to the UE.

Different implementation manners of the technical solutions of the present invention are described below by using interaction processes among UE, a base station corresponding to an LCT cell, a base station corresponding to an NCT cell, and an MCE.

It should be noted that the following embodiments are described by using an example in which an LCT cell and an NCT cell belong to different base stations. For a scenario in which an LCT cell and an NCT cell belong to a same base station, in different embodiments, information or data sent by the same base station to UE is sent by different cells, that is, is sent by the LCT cell or sent by the NCT cell. Information sent by an MCE to the same base station may include information about the LCT cell and information about the NCT cell, and an implementation principle of the scenario is the same as that of the scenario in which an LCT cell and an NCT cell belong to different base stations, and is therefore no longer described.

FIG. 5 is a flowchart of Embodiment 5 of a service processing method for a new carrier type cell provided in the present invention. As shown in FIG. 5, the service processing method for a new carrier type cell in this embodiment includes:
S501: An MCE sends MBMS configuration information of an NCT cell to a base station corresponding to an LCT cell.
   Specifically, the MBMS configuration information of the NCT cell may be included in interface setup feedback information sent by the MCE to the base station corresponding to the LCT cell. Before S501, the method may further include a step that the base station corresponding to the LCT cell sends interface setup request information to the MCE.
S502: The base station corresponding to the LCT cell sends a system message including the MBMS configuration information of the NCT cell to UE.
   In this embodiment, with regard to the description of the MBMS configuration information of the NCT cell, reference may be made to the embodiment shown in FIG. 1, and details are no longer provided herein.
S503: The MCE sends MBMS session start indication information of the NCT cell to the base station corresponding to the LCT cell.
   Specifically, when the NCT cell needs to start a new MBMS session, the MCE sends MBMS session start indication information of the NCT cell to the base station corresponding to the LCT cell. The MBMS session start indication information of the NCT cell includes NCT cell identifier information and MBSFN area identifier information, and optionally may further include an MCCH update time. It may be understood that after S503, the method may further include a step that the base station corresponding to the LCT cell sends MBMS session start feedback information of the NCT cell to the MCE.
S504: The base station corresponding to the LCT cell sends a PDCCH of the LCT cell to the UE, where the PDCCH is used for indicating an MCCH information change notification of the NCT cell.

In this embodiment, a base station corresponding to an LCT cell sends a PDCCH of an LCT cell to UE, where the PDCCH is used for indicating an MCCH information change notification of an NCT cell, and the UE listens to a PDCCH of an MBSFN subframe of the LCT cell according to received configuration information of the NCT cell, so as to listen to whether an MCCH of the NCT cell is changed.

In this embodiment, a PDCCH does not exist in an NCT cell, and therefore a PDCCH of an LCT cell is used to indicate an MCCH information change notification of the NCT cell, so that it can be implemented that the MCCH information change notification of the NCT cell is sent to UE, and the UE determines whether an MCCH of the NCT cell is changed, thereby further ensuring support of an NCT cell for an MBMS.

Optionally, that the PDCCH is used for indicating an MCCH information change notification of the NCT cell includes one of the following:
using a reserved bit of DCI 1C to indicate the MCCH information change notification of the NCT cell;
using bits of DCI 0, 1, 1A, 1B, 1D, 2, 2A, 2B, 2C, 3, 3A, and 4 to indicate the MCCH information change notification of the NCT cell; and
using DCI scrambled with a first M-RNTI to indicate the MCCH information change notification of the NCT cell, where the first M-RNTI corresponds to the MCCH information change notification.

Specifically, because an MCCH information change notification of the LCT cell is indicated by using a downlink control indication (referred to as DCI in short) 1C, any one of the foregoing three manners may be used to indicate the MCCH information change notification of the NCT cell:

Use of the first M-RNTI to scramble the DCI used for indicating the MCCH information change notification of the NCT cell may implement distinguishing of the MCCH information change notification of the NCT cell from the MCCH information change notification of the LCT cell, and the first M-RNTI may be a new M-RNTI other than an existing M-RNTI.

Each bit corresponds to one MBSFN area of one NCT carrier, and a correspondence may be first an NCT carrier and then an MBSFN area, or first an MBSFN area and then an NCT carrier.

Optionally, in another implementation manner of indicating the MCCH information change notification of the NCT cell, the MCCH information change notification uses a bit in DCI to indicate an NCT carrier or an MBSFN area where MCCH is changed; and
the MBMS configuration information of the NCT cell further includes an extended MCCH change notification configuration information, where the extended MCCH change notification configuration information is used for indicating an MBSFN area, where an MCCH is changed, in the NCT carrier.

Specifically, because multiple NCT cells may be configured for one LCT cell, in this case, space may be insufficient if DCI of the LCT cell is used to carry the MCCH information change notification. In this case, the DCI may only be used for carrying a part of information in the MCCH information change notification, for example, only used for distinguishing which NCT carrier has an MCCH information change notification, or only used for distinguishing which MBSFN area has an MCCH information change notification.

"Extended MCCH change notification listening configuration information" is introduced in the configuration information of the NCT cell, and is used for carrying information, other than information carried by using DCI, in the MCCH information change notification, so that the UE acquires which MBSFN area in which carrier to which a specific MCCH information change notification corresponds. Rest information may be sent on a PMCH, and a format may be a new media access control control element (referred to as MAC CE in short).

For example, 3 bits in DCI may be used to separately correspond to 3 NCT carriers to indicate an NCT carrier where an MCCH is changed. After acquiring, from the three bits, which NCT where an MCCH is changed, the UE acquires a new MAC CE according to the "extended MCCH change notification listening configuration information", where the MAC CE includes 8 bits, which separately correspond to 8 MBSFN areas in the NCT cell.

The UE may receive, based on the "extended MCCH change notification listening configuration information", an "extended MCCH information change notification" sent by the LCT cell or the NCT cell. If the "extended MCCH change notification listening configuration information" is sent by the LCT cell to the UE, an MBSFN subframe of the LCT cell is occupied. If the "extended MCCH change notification listening configuration information" is sent by the NCT cell to the UE, different NCT cells occupy respective MBSFN subframes.
S505: The MCE sends MBSFN area configuration information of the NCT cell to a base station corresponding to the NCT cell.
   Specifically, the MBSFN area configuration information may be included in MBMS scheduling information sent by the MCE to the base station corresponding to the NCT cell. It may be understood that after S505, the method may further include a step that the base station corresponding to the NCT cell sends MBMS scheduling feedback information to the MCE.
S506: The base station corresponding to the NCT cell sends the MBSFN area configuration information of the NCT cell to the UE.
S507: The base station corresponding to the NCT cell sends MSI and an MTCH of the NCT cell to the UE.

In the service processing method for an NCT cell provided in this embodiment, a base station corresponding to an LCT cell sends a system message including MBMS configuration information of an NCT cell to UE, and the base station corresponding to the LCT cell then sends a PDCCH of the LCT cell to the UE, where the PDCCH is used for indicating an MCCH information change notification of the NCT cell; and a base station corresponding to the NCT cell sends MBSFN area configuration information of the NCT cell to the UE, and then sends service data such as MSI and an MTCH of the NCT cell to the UE, which can implement support of an NCT cell for an MBMS, and extend application scenarios of an MBMS.

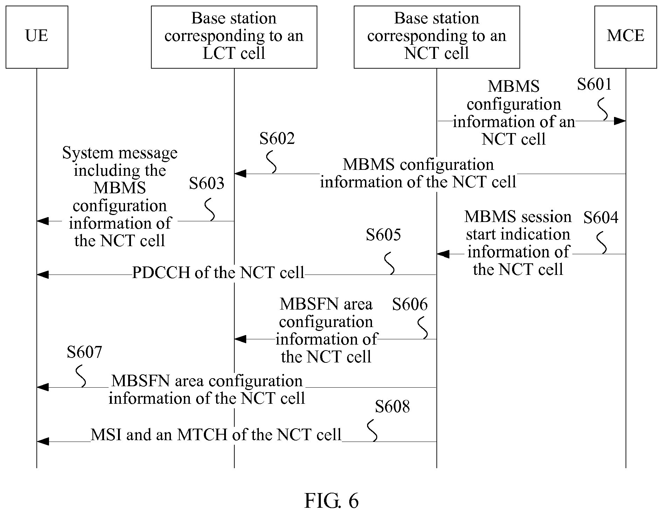

FIG. 6 is a flowchart of Embodiment 6 of a service processing method for a new carrier type cell provided in the present invention. As shown in FIG. 6, a difference of the service processing method for a new carrier type cell in this embodiment from that in the embodiment shown in FIG. 5 lies in that: In this embodiment, a base station corresponding to an NCT cell sends a PDCCH of the NCT cell to UE, where the PDCCH is used for indicating an MCCH information change notification of the NCT cell. The service processing method includes:
S601: A base station corresponding to an NCT cell sends MBMS configuration information of the NCT cell to an MCE.
S602: The MCE sends the MBMS configuration information of the NCT cell to a base station corresponding to an LCT cell.
   It may be understood that S601 and S602 are that the base station corresponding to the NCT cell indirectly sends, by using the MCE, the MBMS configuration information of the NCT cell to the base station corresponding to the LCT cell, or the base station corresponding to the NCT cell may directly send the MBMS configuration information of the NCT cell to the base station corresponding to the LCT cell.
S603: The base station corresponding to the LCT cell sends a system message including the MBMS configuration information of the NCT cell to UE.
   In this embodiment, with regard to the description of the MBMS configuration information of the NCT cell, reference may be made to the embodiment shown in FIG. 1, and details are no longer provided herein.
S604: The MCE sends MBMS session start indication information of the NCT cell to the base station corresponding to the NCT cell.
   Specifically, when the NCT cell needs to start a new MBMS session, the MCE sends MBMS session start indication information of the NCT cell to the base station corresponding to the LCT cell. It may be understood that after S604, the method may further include a step that the base station corresponding to the NCT cell sends MBMS session start feedback information to the MCE.
S605: The base station corresponding to the NCT cell sends a PDCCH of the NCT cell to the UE, where the PDCCH is used for indicating an MCCH information change notification of the NCT cell.
   Specifically, in this embodiment, a new time-frequency resource obtained by means of division may be used to transmit the PDCCH of the NCT cell, where the PDCCH of the NCT cell may also be referred to as an ePDCCH.
   Optionally, the PDCCH of the NCT cell includes an MCCH information change notification scrambled by using an M-RNTI, where each bit in the MCCH information change notification corresponds to one MBSFN area.
S606: The MCE sends MBSFN area configuration information of the NCT cell to the base station corresponding to the NCT cell.
   Specifically, the MBSFN area configuration information of the NCT cell may be included in MBMS scheduling information sent by the MCE to the NCT cell. It may be understood that after S603, the method may further include a step that the base station corresponding to the NCT cell sends MBMS scheduling feedback information to the MCE.
S607: The base station corresponding to the NCT cell sends the MBSFN area configuration information of the NCT cell to the UE.
S608: The base station corresponding to the NCT cell sends MSI and an MTCH of the NCT cell to the UE.

In the service processing method for an NCT cell provided in this embodiment, a base station corresponding to an LCT cell sends a system message including MBMS configuration information of an NCT cell to UE, and a base station corresponding to the NCT cell then sends a PDCCH of the NCT cell to the UE, where the PDCCH is used for indicating an MCCH information change notification of the NCT cell; and the base station corresponding to the NCT cell sends MBSFN area configuration information of the NCT cell to the UE, and then sends service data such as MSI and an MTCH of the NCT cell to the UE, which can implement support of an NCT cell for an MBMS, and extend application scenarios of an MBMS.

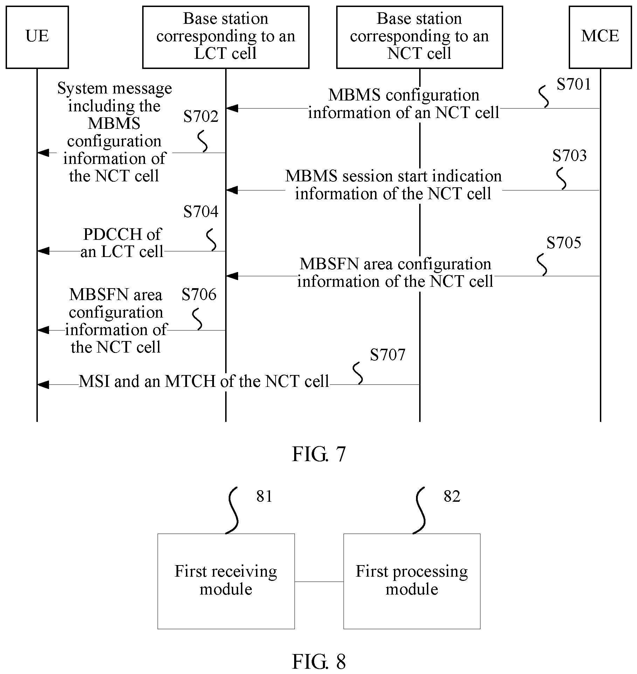

FIG. 7 is a flowchart of Embodiment 7 of a service processing method for a new carrier type cell provided in the present invention. As shown in FIG. 7, a difference of the service processing method for a new carrier type cell in this embodiment from that in the embodiment shown in FIG. 5 lies in that: A base station corresponding to an LCT cell sends MBSFN area configuration information of an NCT cell to UE. The service processing method includes:
S701: An MCE sends MBMS configuration information of an NCT cell to a base station corresponding to an LCT cell.
   Specifically, the MBMS configuration information of the NCT cell may be included in interface setup feedback information sent by the MCE to the base station corresponding to the LCT cell. Before S701, the method may further include a step that the base station corresponding to the LCT cell sends interface setup request information to the MCE.
S702: The base station corresponding to the LCT cell sends a system message including the MBMS configuration information of the NCT cell to UE.
   In this embodiment, with regard to the description of the MBMS configuration information of the NCT cell, reference may be made to the embodiment shown in FIG. 1, and details are no longer provided herein.
S703: The MCE sends MBMS session start indication information of the NCT cell to the base station corresponding to the LCT cell.
   Specifically, when the NCT cell needs to start a new MBMS session, the MCE sends MBMS session start indication information of the NCT cell to the base station corresponding to the LCT cell. The MBMS session start indication information of the NCT cell includes NCT cell identifier information and MBSFN area identifier information, and optionally may further include an MCCH update time. It may be understood that after S703, the method may further include a step that the base station corresponding to the LCT cell sends MBMS session start feedback information of the NCT cell to the MCE.
S704: The base station corresponding to the LCT cell sends a PDCCH of the LCT cell to the UE, where the PDCCH is used for indicating an MCCH information change notification of the NCT cell.
S705: The MCE sends MBSFN area configuration information of the NCT cell to the base station corresponding to the LCT cell.
   Specifically, the MBSFN area configuration information of the NCT cell may be included in MBMS scheduling information sent by the MCE to the base station corresponding to the LCT cell. It may be understood that after S705, the method may further include a step that the base station corresponding to the LCT cell sends MBMS scheduling feedback information to the MCE.
S706: The base station corresponding to the LCT cell sends the MBSFN area configuration information of the NCT cell to the UE.

The MBSFN area configuration information sent by the base station corresponding to the LCT cell to the UE may be of the NCT cell, or may be of the LCT cell, and therefore distinguishing may be performed in the following two manners:
manner 1: the MBSFN area configuration information of the NCT cell is tagged by using a reserved logical channel identifier LCID; or
manner 2: the MBSFN area configuration information of the NCT cell is carried by using a newly configured MBSFN subframe resource, and the MBMS configuration information of the NCT cell further includes a configuration of the newly configured MBSFN subframe resource.

A modulation and coding manner needs to be reduced during transmission of MBSFN area configuration information, and when an NCT cell transmits an MBSFN area configuration and MBMS service data by using a same resource block, efficiency of transmitting the MBMS service data is decreased. In this embodiment, an LCT cell sends MBSFN area configuration information of an NCT cell, so that efficiency of data transmission can be improved.
S707: The NCT cell sends MSI and an MTCH of the NCT cell to the UE.

In the service processing method for an NCT cell provided in this embodiment, a base station corresponding to an LCT cell sends a system message including MBMS configuration information of the NCT cell to UE, and the base station corresponding to the LCT cell then sends a PDCCH of the LCT cell to the UE, where the PDCCH is used for indicating an MCCH information change notification of the NCT cell; and the base station corresponding to the LCT cell sends MBSFN area configuration information of the NCT cell to the UE, and a base station corresponding to the NCT cell then sends service data such as MSI and an MTCH of the NCT cell to the UE, which can implement support of an NCT cell for an MBMS, extend application scenarios of an MBMS, and further improve efficiency of data transmission.

The embodiments shown in FIG. 5, FIG. 6, and FIG. 7 are all based on a scenario in which MBMS configuration information of an NCT cell is changeable. In another implementation manner, a fixed configuration may be used for MBMS configuration information of an NCT cell, where the fixed configuration may include: a fixed MBSFN area information configuration, and UE may perform MBMS service configuration on the NCT cell based on the fixed MBMS configuration, and may receive MBMS service data.

FIG. 8 is a schematic structural diagram of Embodiment 1 of user equipment provided in the present invention. As shown in FIG. 8, the user equipment in this embodiment includes: a first receiving module 81 and a first processing module 82, where the first receiving module 81 is configured to receive a system message sent by a base station corresponding to an LCT cell, where the system message includes MBMS configuration information of an NCT cell; and the first processing module 82 is configured to perform service configuration processing on an MBMS of the NCT cell according to the MBMS configuration information of the NCT cell.

Optionally, the MBMS configuration information of the NCT cell includes the following information:
NCT cell identifier information or NCT carrier identifier information;
MBSFN area identifier information; and
MCCH configuration information.

Optionally, the MBMS configuration information of the NCT cell further includes at least one of the following information:
an MCCH information change notification indication;
an MCCH information change notification configuration;
non-MBMS resource allocation information; and
working mode information.

Optionally, the working mode information includes at least one of the following information:
spatial multiplexing configuration information;
reference signal configuration information; and
transmission mode configuration information.

Furthermore, the first receiving module 81 is further configured to: after receiving the system message sent by the base station corresponding to the LCT cell, receive a PDCCH, of the LCT cell, sent by the base station corresponding to the LCT cell, where the PDCCH is used for indicating an MCCH information change notification of the NCT cell.

Optionally, that the PDCCH is used for indicating an MCCH information change notification of the NCT cell includes one of the following:
using a reserved bit of DCI 1C to indicate the MCCH information change notification of the NCT cell;
using bits of DCI 0, 1, 1A, 1B, 1D, 2, 2A, 2B, 2C, 3, 3A, and 4 to indicate the MCCH information change notification of the NCT cell; and
using DCI scrambled with a first M-RNTI to indicate the MCCH information change notification of the NCT cell, where the first M-RNTI corresponds to the MCCH information change notification.

Optionally, the MCCH information change notification uses a bit in DCI to indicate an NCT carrier or an MBSFN area where MCCH information is changed; and
the MBMS configuration information of the NCT cell further includes an extended MCCH information change notification configuration, where the extended MCCH change notification configuration information is used for indicating an MBSFN area, where the MCCH information is changed, in the NCT carrier.

Furthermore, the first receiving module 81 is further configured to: after receiving the system message sent by the base station corresponding to the LCT cell, receive a PDCCH, of the NCT cell, sent by a base station corresponding to the NCT cell, where the PDCCH is used for indicating an MCCH information change notification of the NCT cell.

Optionally, the PDCCH includes an MCCH information change notification scrambled by using an M-RNTI.

Furthermore, the first receiving module 81 is further configured to: after receiving the system message sent by the base station corresponding to the LCT cell, receive MBSFN area configuration information, of the NCT cell, sent by the base station corresponding to the NCT cell; or
receive MBSFN area configuration information, of the NCT cell, sent by the base station corresponding to the LCT cell.

Furthermore, the first receiving module 81 is further configured to: after receiving the MBSFN area configuration information, receive multicast channel scheduling information MSI and a multicast service channel MTCH, of the NCT cell, sent by the base station corresponding to the NCT cell.

The apparatus in this embodiment may be configured to execute the technical solutions of the method embodiment shown in FIG. 1 or the methods executed by the user equipments in FIG. 5, FIG. 6, and FIG. 7, and implementation principles and technical effects of the apparatus and the technical solutions are similar, and are no longer described herein.

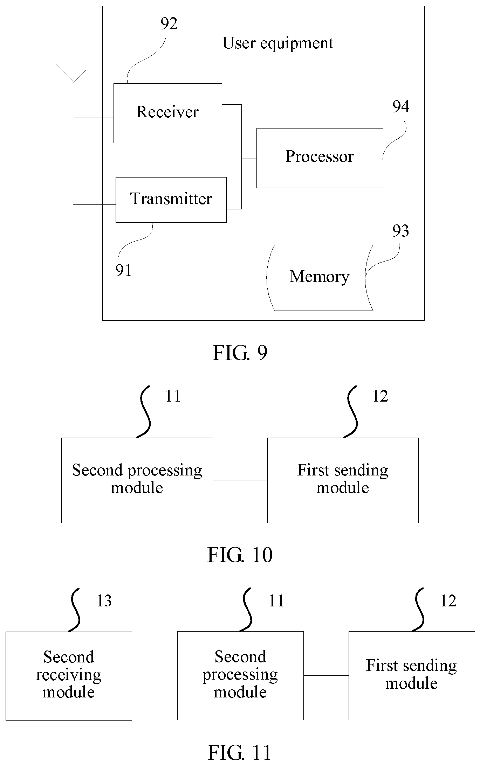

FIG. 9 is a schematic structural diagram of Embodiment 2 of user equipment provided in the present invention. As shown in FIG. 9, the user equipment in this embodiment includes a transmitter 91, a receiver 92, a memory 93, and a processor 94 that is separately connected to the transmitter 91, the receiver 92, and the memory 93. Certainly, the user equipment in this embodiment may further include general-purpose members such as an antenna, a baseband processing member, an intermediate radio frequency processing member, and an input/output apparatus, which are not limited in any way in this embodiment of the present invention.

The memory 93 stores a group of program code, and the processor 94 is configured to invoke the program code stored in the memory 93, to execute the following operations:
receiving a system message sent by a base station corresponding to an LCT cell, where the system message includes MBMS configuration information of an NCT cell; and
performing service configuration processing on an MBMS of the NCT cell according to the MBMS configuration information of the NCT cell.

FIG. 10 is a schematic structural diagram of Embodiment 1 of a base station corresponding to a legacy carrier type cell provided in the present invention. As shown in FIG. 10, the base station corresponding to a legacy carrier type cell in this embodiment includes: a second processing module 11 and a first sending module 12, where the second processing module 11 is configured to generate a system message, where the system message includes MBMS configuration information of an NCT cell; and the first sending module 12 is configured to send the system message to UE, so that the UE performs service configuration processing on an MBMS of the NCT cell according to the MBMS configuration information of the NCT cell.

Optionally, the MBMS configuration information of the NCT cell includes the following information:
NCT cell identifier information or NCT carrier identifier information;
MBSFN area identifier information; and
MCCH configuration information.

Optionally, the MBMS configuration information of the NCT cell further includes at least one of the following information:
an MCCH information change notification indication;
an MCCH information change notification configuration;
non-MBMS resource allocation information; and
working mode information.

Optionally, the working mode information includes at least one of the following information:
spatial multiplexing configuration information;
reference signal configuration information; and
transmission mode configuration information.

Furthermore, the first sending module 12 is further configured to: after sending the system message to the UE, send a PDCCH of the LCT cell to the UE, where the PDCCH is used for indicating an MCCH information change notification of the NCT cell.

Optionally, that the PDCCH is used for indicating an MCCH information change notification of the NCT cell includes one of the following:
using a reserved bit of DCI 1C to indicate the MCCH information change notification of the NCT cell;
using bits of DCI 0, 1, 1A, 1B, 1D, 2, 2A, 2B, 2C, 3, 3A, and 4 to indicate the MCCH information change notification of the NCT cell; and
using DCI scrambled with a first M-RNTI to indicate the MCCH information change notification of the NCT cell, where the first M-RNTI corresponds to the MCCH information change notification.

Optionally, the MCCH information change notification uses a bit in DCI to indicate an NCT carrier or an MBSFN area where MCCH information is changed; and
the MBMS configuration information of the NCT cell further includes an extended MCCH information change notification configuration, where the extended MCCH change notification configuration information is used for indicating an MBSFN area, where an MCCH is changed, in the NCT carrier.

Furthermore, the first sending module 12 is further configured to: after sending the system message to the UE, send MBSFN area configuration information of the NCT cell to the UE.

Optionally, the MBSFN area configuration information of the NCT cell is tagged by using a reserved logical channel identifier LCID; or
the MBSFN area configuration information of the NCT cell is carried by using a newly configured MBSFN subframe resource, and the MBMS configuration information of the NCT cell further includes a configuration of the newly configured MBSFN subframe resource.

The apparatus in this embodiment may be configured to execute the technical solution of the method embodiment shown in FIG. 2, and implementation principles and technical effects of the apparatus and the technical solution are similar, and are no longer described herein.

FIG. 11 is a schematic structural diagram of Embodiment 2 of a base station corresponding to a legacy carrier type cell provided in the present invention. As shown in FIG. 11, the base station corresponding to a legacy carrier type cell in this embodiment further includes, on a basis of the embodiment shown in FIG. 10, a second receiving module 13. The second receiving module 13 is configured to: before the system message is generated, receive the MBMS configuration information, of the NCT cell, sent by a base station corresponding to the NCT cell or an MCE.

Furthermore, the second receiving module 13 is further configured to: before the PDCCH of the LCT cell is sent to the UE, receive MBMS session start indication information, of the NCT cell, sent by the MCE.

Furthermore, the second receiving module 13 is further configured to: before the MBSFN area configuration information of the NCT cell is sent to the UE, receive the MBSFN area configuration information, of the NCT cell, sent by the MCE.

The apparatus in this embodiment may be configured to execute the technical solutions of the methods executed by the base stations corresponding to a legacy carrier type cell in the embodiments shown in FIG. 5, FIG. 6, and FIG. 7, and implementation principles and technical effects of the apparatus and the technical solutions are similar, and are no longer described herein.

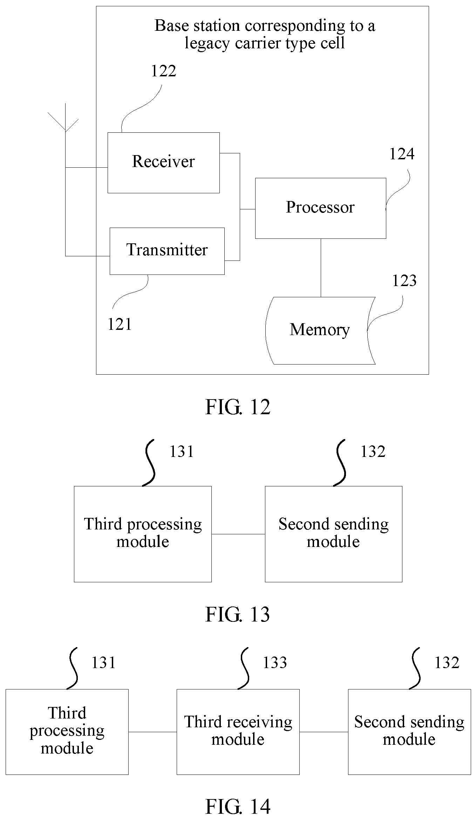

FIG. 12 is a schematic structural diagram of Embodiment 3 of a base station corresponding to a legacy carrier type cell provided in the present invention. As shown in FIG. 12, the base station corresponding to a legacy carrier type cell in this embodiment includes a transmitter 121, a receiver 122, a memory 123, and a processor 124 that is separately connected to the transmitter 121, the receiver 122, and the memory 123. Certainly, the base station corresponding to a legacy carrier type cell in this embodiment may further include general-purpose members such as an antenna, a baseband processing member, an intermediate radio frequency processing member, and an input/output apparatus, which are not limited in any way in this embodiment of the present invention.

The memory 123 stores a group of program code, and the processor 124 is configured to invoke the program code stored in the memory 123, to execute the following operations:
generating a system message, where the system message includes MBMS configuration information of an NCT cell; and
sending the system message to UE, so that the UE performs service configuration processing on an MBMS of the NCT cell according to the MBMS configuration information of the NCT cell.

FIG. 13 is a schematic structural diagram of Embodiment 1 of a base station corresponding to a new carrier type cell provided in the present invention. As shown in FIG. 13, the base station corresponding to a new carrier type cell in this embodiment includes: a third processing module 131 and a second sending module 132, where the third processing module 131 is configured to generate MBMS configuration information of an NCT cell; and the second sending module 132 is configured to send the MBMS configuration information to a base station corresponding to an LCT cell, so that the base station corresponding to the LCT cell generates a system message including the MBMS configuration information of the NCT cell according to the MBMS configuration information and sends the system message to UE.

Optionally, the second sending module 132 is specifically configured to send the MBMS configuration information of the NCT cell to an MCE, so that the MCE sends the MBMS configuration information of the NCT cell to the base station corresponding to the LCT cell.

Optionally, the MBMS configuration information of the NCT cell includes the following information:
NCT cell identifier information or NCT carrier identifier information;
MBSFN area identifier information; and
MCCH configuration information.

Optionally, the MBMS configuration information of the NCT cell further includes at least one of the following information:
an MCCH information change notification indication;
an MCCH information change notification configuration;
non-MBMS resource allocation information; and
working mode information.

Optionally, the working mode information includes at least one of the following information:
spatial multiplexing configuration information;
reference signal configuration information; and
transmission mode configuration information.

Furthermore, the second sending module 132 is further configured to: after sending the MBMS configuration information to the base station corresponding to the LCT cell, send a PDCCH of the NCT cell to the UE, where the PDCCH is used for indicating an MCCH information change notification of the NCT cell.

Optionally, the PDCCH includes an MCCH information change notification scrambled by using an M-RNTI.

Furthermore, the second sending module 132 is further configured to: after sending the MBMS configuration information to the base station corresponding to the LCT cell, send MBSFN area configuration information of the NCT cell to the UE.

Furthermore, the second sending module 132 is further configured to: after sending the MBSFN area configuration information of the NCT cell to the UE, send multicast channel scheduling information MSI and a multicast service channel MTCH of the NCT cell to the UE.

The apparatus in this embodiment may be configured to execute the technical solution of the method embodiment shown in FIG. 3, and implementation principles and technical effects of the apparatus and the technical solution are similar, and are no longer described herein.

FIG. 14 is a schematic structural diagram of Embodiment 2 of a base station corresponding to a new carrier type cell provided in the present invention. As shown in FIG. 14, the base station corresponding to a new carrier type cell in this embodiment further includes, on a basis of the embodiment shown in FIG. 13, a third receiving module 133. The third receiving module 133 is configured to: before the MBSFN area configuration information of the NCT cell is sent to the UE, receive the MBSFN area configuration information, of the NCT cell, sent by the MCE.

The apparatus in this embodiment may be configured to execute the technical solutions of the methods executed by the base stations corresponding to a new carrier type cell in the embodiments shown in FIG. 5, FIG. 6, and FIG. 7, and implementation principles and technical effects of the apparatus and the technical solutions are similar, and are no longer described herein.

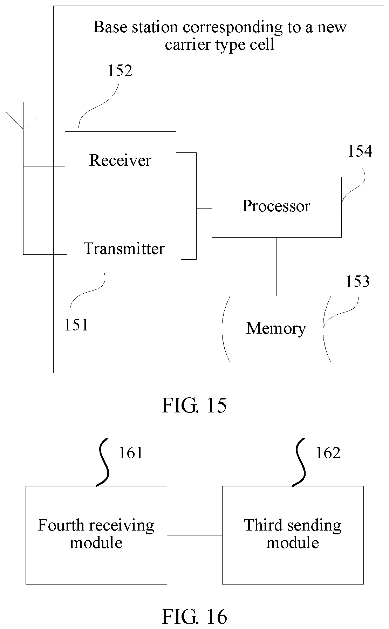

FIG. 15 is a schematic structural diagram of Embodiment 3 of a base station corresponding to a new carrier type cell provided in the present invention. As shown in FIG. 14, the base station corresponding to a new carrier type cell in this embodiment includes a transmitter 151, a receiver 152, a memory 153, and a processor 154 that is separately connected to the transmitter 151, the receiver 152, and the memory 153. Certainly, the base station corresponding to a new carrier type cell in this embodiment may further include general-purpose members such as an antenna, a baseband processing member, an intermediate radio frequency processing member, and an input/output apparatus, which are not limited in any way in this embodiment of the present invention.

The memory 153 stores a group of program code, and the processor 154 is configured to invoke the program code stored in the memory 153, to execute the following operations:
generating MBMS configuration information of an NCT cell; and
sending the MBMS configuration information to a base station corresponding to an LCT cell, so that the base station corresponding to the LCT cell generates a system message including the MBMS configuration information of the NCT cell according to the MBMS configuration information and sends the system message to UE.

FIG. 16 is a schematic structural diagram of Embodiment 1 of a multi-cell/multicast coordination entity provided in the present invention. The multi-cell/multicast coordination entity in this embodiment includes: a fourth receiving module 161 and a third sending module 162, where the fourth receiving module 161 is configured to receive MBMS configuration information, of an NCT cell, sent by a base station corresponding to the NCT cell; and the third sending module 162 is configured to send the MBMS configuration information to a base station corresponding to an LCT cell, so that the base station corresponding to the LCT cell generates a system message including the MBMS configuration information of the NCT cell according to the MBMS configuration information and sends the system message to UE.

Optionally, the MBMS configuration information of the NCT cell includes the following information:
NCT cell identifier information or NCT carrier identifier information;
MBSFN area identifier information; and
MCCH configuration information.

Optionally, the MBMS configuration information of the NCT cell further includes at least one of the following information:
an MCCH information change notification indication;
an MCCH information change notification configuration;
non-MBMS resource allocation information; and
working mode information.

Optionally, the working mode information includes at least one of the following information:
spatial multiplexing configuration information;
reference signal configuration information; and
transmission mode configuration information.

Furthermore, the third sending module 162 is further configured to: after sending the MBMS configuration information to the base station corresponding to the LCT cell, send MBMS session start indication information of the NCT cell to the base station corresponding to the LCT cell, so that the base station corresponding to the LCT cell sends a PDCCH of the LCT cell to the UE, where the PDCCH is used for indicating an MCCH information change notification of the NCT cell; or
send MBMS session start indication information of the NCT cell to the base station corresponding to the NCT cell, so that the base station corresponding to the NCT cell sends a PDCCH of the NCT cell to the UE, where the PDCCH is used for indicating an MCCH information change notification of the NCT cell.

Optionally, that the PDCCH of the LCT cell is used for indicating an MCCH information change notification of the NCT cell includes one of the following:
using a reserved bit of downlink control information DCI 1C to indicate the MCCH information change notification of the NCT cell;
using bits of DCI 0, 1, 1A, 1B, 1D, 2, 2A, 2B, 2C, 3, 3A, and 4 to indicate the MCCH information change notification of the NCT cell; and
using DCI scrambled with a first M-RNTI to indicate the MCCH information change notification of the NCT cell, where the first M-RNTI corresponds to the MCCH information change notification; and
the PDCCH of the NCT cell includes an MCCH information change notification scrambled by using an M-RNTI.

Furthermore, the third sending module 162 is further configured to: after sending the MBMS configuration information to the base station corresponding to the LCT cell, send MBSFN area configuration information of the NCT cell to the base station corresponding to the LCT cell, so that the base station corresponding to the LCT cell sends the MBSFN area configuration information of the NCT cell to the UE; or
send MBSFN area configuration information of the NCT cell to the base station corresponding to the NCT cell, so that the base station corresponding to the NCT cell sends the MBSFN area configuration information of the NCT cell to the UE.

The apparatus in this embodiment may be configured to execute the technical solutions of the method embodiment shown in FIG. 4 or the methods executed by the multi-cell/multicast coordination entities shown in FIG. 5, FIG. 6, and FIG. 7, and implementation principles and technical effects of the apparatus and the technical solutions are similar, and are no longer described herein.

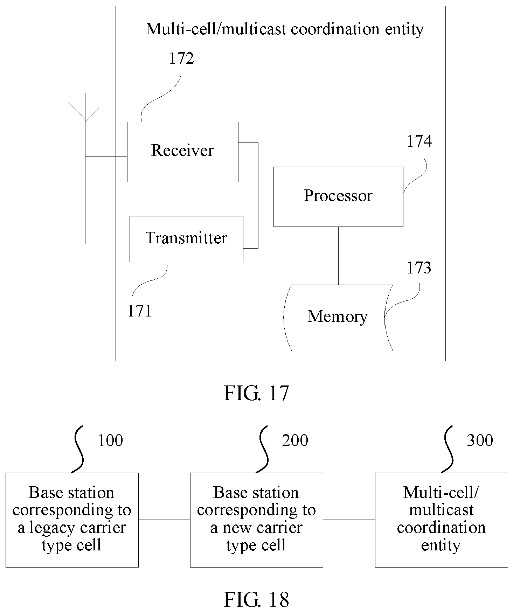

FIG. 17 is a schematic structural diagram of Embodiment 2 of a multi-cell/multicast coordination entity provided in the present invention. The multi-cell/multicast coordination entity in this embodiment includes a transmitter 171, a receiver 172, a memory 173, and a processor 174 that is separately connected to the transmitter 171, the receiver 172, and the memory 173. Certainly, the multi-cell/multicast coordination entity in this embodiment may further include general-purpose members such as an antenna, a baseband processing member, an intermediate radio frequency processing member, and an input/output apparatus, which are not limited in any way in this embodiment of the present invention.

The memory 173 stores a group of program code, and the processor 174 is configured to invoke the program code stored in the memory 173, to execute the following operations:
receiving MBMS configuration information, of an NCT cell, sent by a base station corresponding to the NCT cell; and
sending the MBMS configuration information to a base station corresponding to an LCT cell, so that the base station corresponding to the LCT cell generates a system message including the MBMS configuration information of the NCT cell according to the MBMS configuration information and sends the system message to UE.

FIG. 18 is a schematic structural diagram of Embodiment 1 of a communications system provided in the present invention. As shown in FIG. 18, the communications system in this embodiment may include a base station 100 corresponding to a legacy carrier type cell in Embodiments 1 to 3 of the foregoing base station corresponding to a legacy carrier type cell, a base station 200 corresponding to a new carrier type cell in Embodiments 1 to 3 of the foregoing base station corresponding to a new carrier type cell, and a multi-cell/multicast coordination entity 300 in Embodiment 1 or 2 of the foregoing multi-cell/multicast coordination entity.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A service processing method, comprising:
receiving (S101), by user equipment, UE, a system message sent by a base station corresponding to a legacy carrier type, LCT, cell, wherein the system message comprises multimedia broadcast multicast service, MBMS, configuration information of a new carrier type ,NCT, cell; and
performing (S102), by the UE, service configuration processing on an MBMS of the NCT cell according to the MBMS configuration information of the NCT cell.

2. The method according to claim 1, wherein the MBMS configuration information of the NCT cell comprises the following information:
NCT cell identifier information or NCT carrier identifier information;
multimedia broadcast multicast service single frequency network, MBSFN, area identifier information; and
multicast control channel, MCCH, configuration information.

3. The method according to claim 2, wherein the MBMS configuration information of the NCT cell further comprises at least one of the following information:
an MCCH information change notification indication;
an MCCH information change notification configuration;
non-MBMS resource allocation information; and
working mode information.

4. The method according to any one of claims 1 to 3, after the receiving, by user equipment UE, a system message sent by a base station corresponding to a legacy carrier type, LCT, cell, further comprising:
receiving, by the UE, a physical downlink control channel, PDCCH, of the LCT cell, sent by the base station corresponding to the LCT cell, wherein the PDCCH is used for indicating an MCCH information change notification of the NCT cell.

5. A service processing method, comprising:
generating (S201), by a base station corresponding to a legacy carrier type LCT cell, a system message, wherein the system message comprises multimedia broadcast multicast service MBMS configuration information of a new carrier type NCT cell; and
sending (S202), by the base station corresponding to the LCT cell, the system message to user equipment UE, so that the UE performs service configuration processing on an MBMS of the NCT cell according to the MBMS configuration information of the NCT cell.

6. The method according to claim 5, before the generating, by a base station corresponding to a legacy carrier type, LCT, cell, a system message, further comprising:
receiving, by the base station corresponding to the LCT cell, the MBMS configuration information, of the NCT cell, sent by a base station corresponding to the NCT cell or a multi-cell/multicast coordination entity, MCE.

7. The method according to claim 5 or 6, wherein the MBMS configuration information of the NCT cell comprises the following information:
NCT cell identifier information or NCT carrier identifier information;
multimedia broadcast multicast service single frequency network, MBSFN, area identifier information; and
multicast control channel, MCCH, configuration information.

8. The method according to claim 7, wherein the MBMS configuration information of the NCT cell further comprises at least one of the following information:
an MCCH information change notification indication;
an MCCH information change notification configuration;
non-MBMS resource allocation information; and
working mode information.

9. User equipment, comprising:
a first receiving module (92), configured to receive a system message sent by a base station corresponding to a legacy carrier type, LCT, cell, wherein the system message comprises multimedia broadcast multicast service, MBMS, configuration information of a new carrier type, NCT cell; and
a first processing module (94), configured to perform service configuration processing on an MBMS of the NCT cell according to the MBMS configuration information of the NCT cell.

10. The user equipment according to claim 9, wherein the MBMS configuration information of the NCT cell comprises the following information:
NCT cell identifier information or NCT carrier identifier information;
multimedia broadcast multicast service single frequency network, MBSFN, area identifier information; and
multicast control channel, MCCH, configuration information.

11. The user equipment according to claim 10, wherein the MBMS configuration information of the NCT cell further comprises at least one of the following information:
an MCCH information change notification indication;
an MCCH information change notification configuration;
non-MBMS resource allocation information; and
working mode information.

12. The user equipment according to any one of claims 9 to 11, wherein the first receiving module is further configured to: after receiving the system message sent by the base station corresponding to the legacy carrier type, LCT, cell, receive a physical downlink control channel, PDCCH, of the LCT cell, sent by the base station corresponding to the LCT cell, wherein the PDCCH is used for indicating an MCCH information change notification of the NCT cell.

13. Abase station, comprising:
a second processing module (11) configured to generate a system message, wherein the system message comprises multimedia broadcast multicast service, MBMS, configuration information of a new carrier type NCT cell; and
a first sending module (12), configured to send the system message to user equipment, UE, so that the UE performs service configuration processing on an MBMS of the NCT cell according to the MBMS configuration information of the NCT cell.

14. The base station according to claim 13, further comprising:
a second receiving module, configured to: before the system message is generated, receive the MBMS configuration information, of the NCT cell, sent by a base station corresponding to the NCT cell or a multi-cell/multicast coordination entity MCE.

15. The base station according to claim 13 or 14, wherein the MBMS configuration information of the NCT cell comprises the following information:
NCT cell identifier information or NCT carrier identifier information;
multimedia broadcast multicast service single frequency network, MBSFN, area identifier information; and
multicast control channel, MCCH, configuration information.

## Patentansprüche

1. Dienstverarbeitungsverfahren, umfassend:
Empfangen (S101), durch eine Benutzerausrüstung, UE, einer Systemnachricht, gesandt von einer Basisstation, die mit einer Zelle eines Vorläufer-Trägertyps, LCT, korrespondiert, wobei die Systemnachricht Multimedien-Rundsendung-Vielfachsendung-Dienst- bzw. MBMS-Konfigurationsinformationen einer Zelle eines neuen Trägertyps, NCT, umfasst; und
Durchführen (S102), durch die UE, von Dienstkonfigurationsverarbeitung an einem MBMS der NCT-Zelle gemäß den MBMS-Konfigurationsinformationen der NCT-Zelle.

2. Verfahren nach Anspruch 1, wobei die MBMS-Konfigurationsinformationen der NCT-Zelle die folgenden Informationen umfassen:
NCT-Zellen- Kennungsinformationen oder NCT-Träger-Kennungsinformationen;
Multimedien-Rundsendung-Vielfachsendung-Dienst-Einzelfrequenznetzwerk- bzw. MBSFN-Bereichskennungsinformationen; und
Multimedien-Steuerkanal- bzw. MCCH-Konfigurationsinformationen.

3. Verfahren nach Anspruch 2, wobei die MBMS-Konfigurationsinformationen der NCT-Zelle ferner mindestens eine der folgenden Informationen umfassen:
eine MCCH-Informationenänderung-Benachrichtigungsangabe;
eine MCCH-Informationenänderung-Benachrichtigungskonfiguration;
Nicht-MBMS-Betriebsmittel-Zuweisungsinformationen; und
Arbeitsmodusinformationen.

4. Verfahren nach einem der Ansprüche 1 bis 3, nach dem Empfangen, durch die Benutzerausrüstung UE, einer Systemnachricht, gesandt von einer Basisstation, die mit einer Zelle eines Vorläufer-Trägertyps, LCT, korrespondiert, ferner umfassend: Empfangen, durch die UE, eines physikalischen Abwärtsverbindungs-Steuerkanals, PDCCH, der LCT-Zelle, gesandt von der Basisstation, die mit der LCT-Zelle korrespondiert, wobei der PDCCH zur Angabe einer MCCH-Informationenänderung-Benachrichtigung der NCT-Zelle verwendet wird.

5. Dienstverarbeitungsverfahren, umfassend:
Erzeugen (S201), durch eine Basisstation, die mit einer Zelle eines Vorläufer-Trägertyps, LCT, korrespondiert, einer Systemnachricht, wobei die Systemnachricht Multimedien-Rundsendung-Vielfachsendung-Dienst- bzw. MBMS-Konfigurationsinformationen einer Zelle eines neuen Trägertyps, NCT, umfasst; und
Senden (S202), durch die Basisstation, die mit der LCT-Zelle korrespondiert, der Systemnachricht an eine Benutzerausrüstung UE, so dass die UE Dienstkonfigurationsverarbeitung an einem MBMS der NCT-Zelle gemäß den MBMS-Konfigurationsinformationen der NCT-Zelle durchführt.

6. Verfahren nach Anspruch 5, vor dem Erzeugen, durch die Basisstation, die mit einer Zelle eines Vorläufer-Trägertyps, LCT, korrespondiert, einer Systemnachricht ferner umfassend:
Empfangen, durch die Basisstation, die mit der LCT-Zelle korrespondiert, der MBMS-Konfigurationsinformationen der NCT-Zelle, gesandt von einer Basisstation, die mit der NCT-Zelle korrespondiert, oder einer Mehrfachzellen/Vielfachsendung-Koordinationsentität, MCE.

7. Verfahren nach Anspruch 5 oder 6, wobei die MBMS-Konfigurationsinformationen der NCT-Zelle die folgenden Informationen umfassen:
NCT-Zellen- Kennungsinformationen oder NCT-Träger-Kennungsinformationen;
Multimedien-Rundsendung-Vielfachsendung-Dienst-Einzelfrequenznetzwerk- bzw. MBSFN-Bereichskennungsinformationen; und
Vielfachsendung-Steuerkanal- bzw. MCCH-Konfigurationsinformationen.

8. Verfahren nach Anspruch 7, wobei die MBMS-Konfigurationsinformationen der NCT-Zelle ferner mindestens eine der folgenden Informationen umfassten:
eine MCCH-Informationenänderung-Benachrichtigungsangabe;
eine MCCH-Informationenänderung-Benachrichtigungskonfiguration;
Nicht-MBMS-Betriebsmittel-Zuweisungsinformationen; und
Arbeitsmodusinformationen.

9. Benutzerausrüstung, umfassend:
ein erstes Empfangsmodul (92), konfiguriert zum Empfangen einer Systemnachricht, gesandt von einer Basisstation, die mit einer Zelle eines Vorläufer-Trägertyps, LCT, korrespondiert, wobei die Systemnachricht Multimedien-Rundsendung-Vielfachsendung-Dienst- bzw. MBMS-Konfigurationsinformationen einer Zelle eines neuen Trägertyps, NCT, umfasst; und
ein erstes Verarbeitungsmodul (94), konfiguriert zum Durchführen von Dienstkonfigurationsverarbeitung an einem MBMS der NCT-Zelle gemäß den MBMS-Konfigurationsinformationen der NCT-Zelle.

10. Benutzerausrüstung nach Anspruch 9, wobei die MBMS-Konfigurationsinformationen der NCT-Zelle die folgenden Informationen umfassen:
NCT-Zellen-Kennungsinformationen oder NCT-Träger-Kennungsinformationen;
Multimedien-Rundsendung-Vielfachsendung-Dienst-Einzelfrequenznetzwerk- bzw. MBSFN-Bereichskennungsinformationen; und
Multimedien-Steuerkanal- bzw. MCCH-Konfigurationsinformationen.

11. Benutzerausrüstung nach Anspruch 10, wobei die MBMS-Konfigurationsinformationen der NCT-Zelle ferner mindestens eine der folgenden Informationen umfassen:
eine MCCH-Informationenänderung-Benachrichtigungsangabe;
eine MCCH-Informationenänderung-Benachrichtigungskonfiguration;
Nicht-MBMS-Betriebsmittel-Zuweisungsinformationen; und
Arbeitsmodusinformationen.

12. Benutzerausrüstung nach einem der Ansprüche 9 bis 11, wobei das erste Empfangsmodul ferner konfiguriert ist zum: nach dem Empfangen der Systemnachricht, gesandt von der Basisstation, die mit der Zelle des Vorläufer-Trägertyps, LCT, korrespondiert, Empfangen eines physikalischen Abwärtsverbindungs-Steuerkanals, PDCCH, der LCT-Zelle, gesandt von der Basisstation, die mit der LCT-Zelle korrespondiert, wobei der PDCCH zur Angabe einer MCCH-Informationenänderung-Benachrichtigung der NCT-Zelle verwendet wird.

13. Basisstation, umfassend:
ein zweites Verarbeitungsmodul (11), konfiguriert zum Erzeugen einer Systemnachricht, wobei die Systemnachricht Multimedien-Rundsendung-Vielfachsendung-Dienst- bzw. MBMS-Konfigurationsinformationen einer Zelle eines neuen Trägertyps, NCT, umfasst; und
ein erstes Sendemodul (12), konfiguriert zum Senden der Systemnachricht an eine Benutzerausrüstung, UE, so dass die UE Dienstkonfigurationsverarbeitung an einem MBMS der NCT-Zelle gemäß den MBMS-Konfigurationsinformationen der NCT-Zelle durchführt.

14. Basisstation nach Anspruch 13, ferner umfassend:
ein zweites Empfangsmodul, konfiguriert zum: bevor die Systemnachricht erzeugt wird, Empfangen der MBMS-Konfigurationsinformationen der NCT-Zelle, gesandt von einer Basisstation, die mit der NCT-Zelle korrespondiert, oder einer Mehrfachzellen/Vielfachsendung-Koordinationsentität, MCE.

15. Basisstation nach Anspruch 13 oder 14, wobei die MBMS-Konfigurationsinformationen der NCT-Zelle die folgenden Informationen umfassen:
NCT-Zellen-Kennungsinformationen oder NCT-Träger-Kennungsinformationen;
Multimedien-Rundsendung-Vielfachsendung-Dienst-Einzelfrequenznetzwerk- bzw. MBSFN-Bereichskennungsinformationen; und
Vielfachsendung-Steuerkanal- bzw. MCCH-Konfigurationsinformationen.

## Revendications

1. Procédé de traitement de service, comprenant les étapes suivantes :
recevoir (S101), par un équipement utilisateur UE, un message système envoyé par une station de base correspondant à une cellule à type de porteuse traditionnel, LCT, le message système comportant des informations de configuration de service de diffusion/multidiffusion multimédia, MBMS, d'une cellule à nouveau type de porteuse, NCT ; et
exécuter (S102), par l'UE, un traitement de configuration de service sur un MBMS de la cellule NCT selon les informations de configuration MBMS de la cellule NCT.

2. Procédé selon la revendication 1, dans lequel les informations de configuration MBMS de la cellule NCT comprennent les informations suivantes :
des informations d'identifiant de cellule NCT ou des informations d'identifiant de porteuse NCT ;
des informations d'identifiant de zone de réseau monofréquence de service de diffusion/multidiffusion multimédia, MBSFN ; et
des informations de configuration de canal de contrôle de multidiffusion, MCCH.

3. Procédé selon la revendication 2, dans lequel les informations de configuration MBMS de la cellule NCT comprennent en outre au moins une des informations suivantes :
une indication de notification de changement d'informations MCCH ;
une configuration de notification de changement d'informations MCCH ;
des informations d'attribution de ressources non MBMS ; et
des informations de mode de fonctionnement.

4. Procédé selon l'une quelconque des revendications 1 à 3, après l'étape consistant à recevoir, par un équipement utilisateur UE, un message système envoyé par une station de base correspondant à une cellule à type de porteuse traditionnel, LCT, comprenant en outre :
recevoir, par l'UE, un canal de contrôle de liaison descendante physique, PDCCH, de la cellule LCT, envoyé par la station de base correspondant à la cellule LCT, le PDCCH étant utilisé pour indiquer une notification de changement d'informations MCCH de la cellule NCT.

5. Procédé de traitement de service, comprenant les étapes suivantes :
générer (S201), par une station de base correspondant à une cellule à type de porteuse traditionnel LCT, un message système, le message système comportant des informations de configuration de service de diffusion/multidiffusion multimédia MBMS d'une cellule à nouveau type de porteuse NCT ; et
envoyer (S202), par la station de base correspondant à la cellule LCT, le message système à un équipement utilisateur UE, afin que l'UE exécute un traitement de configuration de service sur un MBMS de la cellule NCT selon les informations de configuration MBMS de la cellule NCT.

6. Procédé selon la revendication 5, avant l'étape consistant à générer, par une station de base correspondant à une cellule à type de porteuse traditionnel, LCT, un message système, comprenant en outre :
recevoir, par la station de base correspondant à la cellule LCT, les informations de configuration MBMS, de la cellule NCT, envoyées par une station de base correspondant à la cellule NCT ou une entité de coordination multicellule/multidiffusion, MCE.

7. Procédé selon la revendication 5 ou 6, dans lequel les informations de configuration MBMS de la cellule NCT comprennent les informations suivantes :
des informations d'identifiant de cellule NCT ou des informations d'identifiant de porteuse NCT ;
des informations d'identifiant de zone de réseau monofréquence de service de diffusion/multidiffusion multimédia, MBSFN ; et
des informations de configuration de canal de contrôle de multidiffusion, MCCH.

8. Procédé selon la revendication 7, dans lequel les informations de configuration MBMS de la cellule NCT comprennent en outre au moins une des informations suivantes :
une indication de notification de changement d'informations MCCH ;
une configuration de notification de changement d'informations MCCH ;
des informations d'attribution de ressources non MBMS ; et
des informations de mode de fonctionnement.

9. Équipement utilisateur, comprenant :
un premier module de réception (92), configuré pour recevoir un message système envoyé par une station de base correspondant à une cellule à type de porteuse traditionnel, LCT, le message système comportant des informations de configuration de service de diffusion/multidiffusion multimédia, MBMS, d'une cellule à nouveau type de porteuse, NCT ; et
un premier module de traitement (94), configuré pour exécuter un traitement de configuration de service sur un MBMS de la cellule NCT, selon les informations de configuration MBMS de la cellule NCT.

10. Équipement utilisateur selon la revendication 9, dans lequel les informations de configuration MBMS de la cellule NCT comprennent les informations suivantes :
des informations d'identifiant de cellule NCT ou des informations d'identifiant de porteuse NCT ;
des informations d'identifiant de zone de réseau monofréquence de service de diffusion/multidiffusion multimédia, MBSFN ; et
des informations de configuration de canal de contrôle de multidiffusion, MCCH.

11. Équipement utilisateur selon la revendication 10, dans lequel les informations de configuration MBMS de la cellule NCT comprennent en outre au moins une des informations suivantes :
une indication de notification de changement d'informations MCCH ;
une configuration de notification de changement d'informations MCCH ;
des informations d'attribution de ressources non MBMS ; et
des informations de mode de fonctionnement.

12. Équipement utilisateur selon l'une quelconque des revendications 9 à 11, dans lequel le premier module de réception est en outre configuré pour : après l'étape consistant à recevoir le message système envoyé par la station de base correspondant à la cellule à type de porteuse traditionnel, LCT, recevoir un canal de contrôle de liaison descendante physique, PDCCH, de la cellule LCT, envoyé par la station de base correspondant à la cellule LCT, le PDCCH étant utilisé pour indiquer une notification de changement d'informations MCCH de la cellule NCT.

13. Station de base, comprenant :
un deuxième module de traitement (11), configuré pour générer un message système, le message système comportant des informations de configuration de service de diffusion/multidiffusion multimédia, MBMS, d'une cellule à nouveau type de porteuse NCT ; et
un premier module d'envoi (12), configuré pour envoyer le message système à un équipement utilisateur UE, afin que l'UE exécute un traitement de configuration de service sur un MBMS de la cellule NCT selon les informations de configuration MBMS de la cellule NCT.

14. Station de base selon la revendication 13, comprenant en outre :
un deuxième module de réception, configuré pour : avant que le message système ne soit généré, recevoir les informations de configuration MBMS, de la cellule NCT, envoyées par une station de base correspondant à la cellule NCT ou une entité de coordination multicellule/multidiffusion, MCE.

15. Station de base selon la revendication 13 ou 14, dans laquelle les informations de configuration MBMS de la cellule NCT comprennent les informations suivantes :
des informations d'identifiant de cellule NCT ou des informations d'identifiant de porteuse NCT ;
des informations d'identifiant de zone de réseau monofréquence de service de diffusion/multidiffusion multimédia, MBSFN ; et
des informations de configuration de canal de contrôle de multidiffusion, MCCH.
